# EUROPEAN PATENT APPLICATION

(11) **EP 4 580 230 A1**
(43) Date of publication of application: **02.07.2025**
(21) Application number: 23867414.7
(22) Date of filing: 15.09.2023
(51) Int. Cl.: H04W 8/24

(54) **COMMUNICATION METHOD AND APPARATUS**

(30) Priority: 24.09.2022 CN 202211168801; 30.08.2023 CN 202311103713
(71) Applicant: Huawei Technologies Co., Ltd., Shenzhen, Guangdong 518129 (CN)
(72) Inventor: CHENG, Wenjie, Shenzhen, Guangdong 518129 (CN); GENG, Tingting, Shenzhen, Guangdong 518129 (CN); ZENG, Yu, Shenzhen, Guangdong 518129 (CN)
(74) Representative: Gill Jennings & Every LLP
(86) International application number: PCT/CN2023/119099
(87) International publication number: WO 2024/061125

(57) **Abstract**

This application relates to a communication method and apparatus. A first communication apparatus receives first information, where the first information includes first sub-information, and the first sub-information indicates a first artificial intelligence (artificial intelligence, AI) function supported by a terminal device. The first communication apparatus determines second information based on the first information, where the second information indicates an AI function that the terminal device is requested to provide. The first communication apparatus sends the second information to the terminal device, and receives third information from the terminal device, where the third information includes a capability parameter corresponding to the AI function indicated by the second information. The terminal device only needs to send, to a network side, a capability parameter actually needed by the network side, to reduce redundant information and transmission overheads.

## Description

### CROSS-REFERENCE TO RELATED APPLICATIONS

This application claims priority to Chinese Patent Application No. 202211168801.X, filed with the China National Intellectual Property Administration on September 24, 2022 and entitled "COMMUNICATION METHOD AND APPARATUS", and this application claims priority to Chinese Patent Application No. 202311103713.6, filed with the China National Intellectual Property Administration on August 30, 2023 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

An artificial intelligence (artificial intelligence, AI) technology is a technology that has been proposed in the 1950s to simulate a human brain for complex computing. With improvement of data storage and computing capabilities, AI is increasingly used. Currently, the 3rd generation partnership project (3rd generation partnership project, 3GPP) proposes that the AI can be applied to a new radio (new radio, NR) system. Network performance and user experience can be improved through intelligent data collection and analysis.

If a base station needs cooperation of a user equipment (user equipment, UE) to implement a corresponding AI function, the base station may first query a capability of the UE. After receiving a query request, the UE may send, to the base station, all AI capability information supported by the UE. All the AI capability information may include all AI functions supported by the UE and a capability parameter that can be provided by the UE for each AI function. However, the base station may need only a part of AI capabilities of the UE, and does not need all AI capabilities of the UE. The UE sends all the AI capability information to the base station. Consequently, the base station receives much redundant information, and transmission overheads are also increased.

### SUMMARY

Embodiments of this application provide a communication method and apparatus, to reduce overheads for sending capability information by a terminal device.

According to a first aspect, a first communication method is provided. The method may be performed by a first communication apparatus, may be performed by another device including a function of the first communication apparatus, or may be performed by a chip system (or a chip) or another functional module, where the chip system or the functional module can implement the function of the first communication apparatus, and the chip system or the functional module is, for example, disposed in the first communication apparatus. For example, the first communication apparatus is an access network device, a CU, a CU-CP, or a CU-CP 2. The method includes: receiving first information, where the first information includes first sub-information, and the first sub-information indicates a first AI function supported by a terminal device; determining second information based on the first information, where the second information indicates an AI function that the terminal device is requested to provide; sending the second information to the terminal device; and receiving third information from the terminal device, where the third information includes a capability parameter corresponding to the AI function indicated by the second information.

In this embodiment of this application, the first communication apparatus may perform screening (or filtering) based on an AI function supported by the terminal device, to determine the second information. The second information may indicate an AI function that a network side actually needs the terminal device to provide, and in this case, the terminal device only needs to send a corresponding capability parameter to the first communication apparatus based on the second information. It can be learned that the terminal device in this embodiment of this application does not need to send all AI capability parameters to the network side. Because of a screening process on the network side, the terminal device only needs to send, to the network side, a capability parameter actually needed by the network side, to reduce redundant information and transmission overheads.

In an optional implementation, the first sub-information further indicates one or more of the following: a collaboration level corresponding to the first AI function; a capability corresponding to the first AI function; an AI algorithm corresponding to the first AI function; or an AI model corresponding to the first AI function. The first sub-information may indicate the first AI function supported by the terminal device and indicate the collaboration level corresponding to the first AI function, so that a capability of the terminal device is indicated more clearly.

In an optional implementation, the second information further indicates one or more of the following: a collaboration level corresponding to the AI function that the terminal device is requested to provide; a capability corresponding to the AI function that the terminal device is requested to provide; an AI algorithm corresponding to the AI function that the terminal device is requested to provide; or an AI model corresponding to the AI function that the terminal device is requested to provide.

In an optional implementation, the third information further includes one or more of the following: a capability parameter corresponding to the collaboration level indicated by the second information; a capability parameter corresponding to the capability indicated by the second information; a capability parameter corresponding to the AI algorithm indicated by the second information; or a capability parameter corresponding to the AI model indicated by the second information.

In an optional implementation, the receiving first information includes: receiving the first information from the terminal device; or receiving the first information from a second communication apparatus, where the second communication apparatus is a neighboring access network device of the first communication apparatus or a core network device. The first information may be from the terminal device, or may be from the neighboring access network device, the core network device, or the like. A specific source is not limited.

In an optional implementation, the first communication apparatus is an access network device; the first communication apparatus is a CU; the first communication apparatus is a CU-CP; the first communication apparatus is a CU-CP 2; the first communication apparatus is an LMF; or the first communication apparatus is an AMF.

In an optional implementation, the first communication apparatus is the CU, the CU-CP, or the CU-CP 2, and the determining second information based on the first information includes: sending the first information to a DU, and receiving the second information from the DU; receiving first AI function requirement information from a DU, and determining the second information based on the first AI function requirement information and the first information, where the first AI function requirement information includes second sub-information, and the second sub-information indicates a second AI function that the DU requests the terminal device to provide; or determining the second information based on second AI function requirement information and the first information, where the second AI function requirement information includes third sub-information, and the third sub-information indicates a third AI function that the first communication apparatus requests the terminal device to provide, or the third sub-information indicates a third AI function that the first communication apparatus requests the terminal device to provide, and further indicates one or more of the following: a collaboration level corresponding to the third AI function, a capability corresponding to the third AI function, an AI algorithm corresponding to the third AI function, or an AI model corresponding to the third AI function. For example, the DU needs the AI function supported by the terminal device. If the first communication apparatus is the CU, the CU-CP, or the CU-CP 2, the DU may perform screening (or filtering) based on the AI function supported by the terminal device, to determine the second information. Alternatively, the DU may send a requirement (for example, the first AI function requirement information) of the DU to the first communication apparatus, and the first communication apparatus performs screening (or filtering) based on the requirement of the DU and the AI function supported by the terminal device, to determine the second information. Alternatively, the first communication apparatus may need the AI function supported by the terminal device. In this case, the first communication apparatus may perform screening (or filtering) based on a requirement of the first communication apparatus and the AI function supported by the terminal device, to determine the second information.

In an optional implementation, the second sub-information further indicates one or more of the following: a collaboration level corresponding to the second AI function; a capability corresponding to the second AI function; an AI algorithm corresponding to the second AI function; or an AI model corresponding to the second AI function.

In an optional implementation, the determining the second information based on the first AI function requirement information and the first information includes one or more of the following: if the first AI function and the second AI function are a same AI function, the first sub-information further indicates that the collaboration level corresponding to the first AI function is a first level, and the second sub-information indicates that the collaboration level corresponding to the second AI function requested by the DU is a second level, and if that the terminal device supports the first level includes supporting the second level, determining that the second information includes the first sub-information; if the first AI function includes the second AI function, determining that the second information includes the second sub-information; or if the first AI function and the second AI function are a same AI function, and the first information does not indicate the collaboration level corresponding to the first AI function, determining that the second information includes the second sub-information. The first communication apparatus may determine the second information in a plurality of manners. This is flexible.

In an optional implementation, the method further includes: sending the third information to the DU. If the DU needs the AI function supported by the terminal device, the first communication apparatus may send the third information to the DU, so that the DU clarifies the AI function provided by the terminal device.

In an optional implementation, the third information includes fourth sub-information, where the fourth sub-information indicates a fourth AI function provided by the terminal device and a value of a capability parameter corresponding to the fourth AI function, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, an AI model corresponding to the fourth AI function, or a value of a capability parameter corresponding to the fourth AI function. Alternatively, the third information includes fourth sub-information and includes a maximum value of a capability parameter supported by the terminal device, where the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function. The third information may include a plurality of pieces of sub-information, and each piece of sub-information may include one AI function provided by the terminal device and a value of a capability parameter corresponding to the AI function, so that the third information indicates an AI capability provided by the terminal device more clearly. Alternatively, the third information may include a plurality of pieces of sub-information, and each piece of sub-information does not include a value of a capability parameter, but the third information further includes the maximum value of the capability parameter supported by the terminal device. Therefore, overheads of the third information can be reduced.

In an optional implementation, the capability parameter includes one or more of the following: a computing capability parameter of the terminal device, an energy consumption parameter of the terminal device, a storage capability parameter of the terminal device, a battery level parameter of the terminal device, a processing delay of the terminal device, an AI model supported by the terminal device, or an AI algorithm supported by the terminal device. In addition, the capability parameter may further include another corresponding parameter. This is not specifically limited.

In an optional implementation, the first AI function includes at least one sub-function, or the first AI function is a sub-function of one AI function. An AI function indicated by one piece of sub-information may be one sub-function, or may be an AI function including at least one sub-function.

According to a second aspect, a second communication method is provided. The method may be performed by a terminal device, may be performed by another device including a function of the terminal device, or may be performed by a chip system (or a chip) or another functional module, where the chip system or the functional module can implement the function of the terminal device, and the chip system or the functional module is, for example, disposed in the terminal device. The method includes: receiving second information from a first communication apparatus, where the second information indicates an AI function that the terminal device is requested to provide; and sending third information to the first communication apparatus, where the third information includes a capability parameter corresponding to the AI function indicated by the second information.

In an optional implementation, the second information further indicates one or more of the following: a collaboration level corresponding to the AI function that the terminal device is requested to provide; a capability corresponding to the AI function that the terminal device is requested to provide; an AI algorithm corresponding to the AI function that the terminal device is requested to provide; or an AI model corresponding to the AI function that the terminal device is requested to provide.

In an optional implementation, the third information further includes one or more of the following: a capability parameter corresponding to the collaboration level indicated by the second information; a capability parameter corresponding to the capability indicated by the second information; a capability parameter corresponding to the AI algorithm indicated by the second information; or a capability parameter corresponding to the AI model indicated by the second information.

In an optional implementation, the method further includes: sending first information to the first communication apparatus, where the first information includes first sub-information, the first sub-information indicates a first AI function supported by the terminal device, and the second information is related to the first information.

In an optional implementation, the first sub-information further indicates one or more of the following: a collaboration level corresponding to the first AI function; a capability corresponding to the first AI function; an AI algorithm corresponding to the first AI function; or an AI model corresponding to the first AI function.

In an optional implementation, the first AI function includes at least one sub-function, or the first AI function is a sub-function of one AI function.

In an optional implementation, the third information includes fourth sub-information, where the fourth sub-information indicates a fourth AI function provided by the terminal device and a value of a capability parameter corresponding to the fourth AI function, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, an AI model corresponding to the fourth AI function, or a value of a capability parameter corresponding to the fourth AI function. Alternatively, the third information includes fourth sub-information and includes a maximum value of a capability parameter supported by the terminal device, where the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function.

In an optional implementation, the capability parameter includes one or more of the following: a computing capability parameter of the terminal device, an energy consumption parameter of the terminal device, a storage capability parameter of the terminal device, a battery level parameter of the terminal device, a processing delay of the terminal device, an AI model supported by the terminal device, or an AI algorithm supported by the terminal device.

For technical effects brought by the second aspect or the optional implementations, refer to the descriptions of the technical effects of the first aspect or the corresponding implementations.

According to a third aspect, a third communication method is provided. The method may be performed by a terminal device, may be performed by another device including a function of the terminal device, or may be performed by a chip system (or a chip) or another functional module, where the chip system or the functional module can implement the function of the terminal device, and the chip system or the functional module is, for example, disposed in the terminal device. The method includes: receiving request information from a first communication apparatus, where the request information indicates an AI function that the terminal device is requested to provide; determining third information based on the request information and capability information of the terminal device, where the third information includes a capability parameter corresponding to the AI function indicated by the request information; and sending the third information to the first communication apparatus. According to the technical solution in this embodiment of this application, the terminal device may determine AI capability information that actually needs to be provided by the terminal device, so that the terminal device can send a corresponding capability parameter to a network side, and does not need to send, to the network side, a capability parameter that is not needed by the network side, to reduce redundant information and transmission overheads. In addition, a process of filtering the capability information of the terminal device is performed on a UE side, and the UE side does not need to send the first information described above to the network side in advance, so that the transmission overheads can be further reduced.

In an optional implementation, the request information further indicates to request one or more of the following: a collaboration level corresponding to the AI function provided by the terminal device, a capability corresponding to the AI function provided by the terminal device, an AI algorithm corresponding to the AI function provided by the terminal device, or an AI model corresponding to the AI function provided by the terminal device.

In an optional implementation, the third information further includes one or more of the following: a capability parameter corresponding to the collaboration level indicated by the request information, a capability parameter corresponding to the capability indicated by the request information, a capability parameter corresponding to the AI algorithm indicated by the request information, or a capability parameter corresponding to the AI model indicated by the request information.

In an optional implementation, the request information includes fifth sub-information, where the fifth sub-information indicates a second AI function that the terminal device is requested to provide, or the fifth sub-information indicates a second AI function that the terminal device is requested to provide, and further indicates to request one or more of the following: a collaboration level corresponding to the second AI function, a capability corresponding to the second AI function, an AI algorithm corresponding to the second AI function, or an AI model corresponding to the second AI function; and/or the capability information includes sixth sub-information, where the sixth sub-information indicates a first AI function supported by the terminal device, or the sixth sub-information indicates a first AI function supported by the terminal device, and further indicates one or more of the following: a collaboration level corresponding to the first AI function, a capability corresponding to the first AI function, an AI algorithm corresponding to the first AI function, or an AI model corresponding to the first AI function. In an implementation of the request information, the request information may include one or more pieces of sub-information, and each piece of sub-information may indicate one AI function that the terminal device is requested to provide, or indicate one AI function that the terminal device is requested to provide and a collaboration level corresponding to the AI function. In addition, in an implementation of the capability information, the capability information may include one or more pieces of sub-information, and each piece of sub-information may indicate one AI function supported by the terminal device, or indicate one AI function supported by the terminal device and a collaboration level corresponding to the AI function.

In an optional implementation, the determining third information based on the request information and capability information of the terminal device includes: if the first AI function and the second AI function are a same AI function, the sixth sub-information indicates that the collaboration level corresponding to the first AI function is a first level, and the fifth sub-information indicates that the collaboration level corresponding to the second AI function is a second level, and if that the terminal device supports the first level includes supporting the second level, determining that the third information includes the fifth sub-information; and/or if the first AI function includes the second AI function, determining that the third information includes the fifth sub-information. The terminal device determines the third information in a plurality of manners. This is flexible.

In an optional implementation, the third information includes fourth sub-information, where the fourth sub-information indicates a fourth AI function provided by the terminal device and a value of a capability parameter corresponding to the fourth AI function, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, an AI model corresponding to the fourth AI function, or a value of a capability parameter corresponding to the fourth AI function. Alternatively, the third information includes fourth sub-information and includes a maximum value of a capability parameter supported by the terminal device, where the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function.

In an optional implementation, the capability parameter includes one or more of the following: a computing capability parameter of the terminal device, an energy consumption parameter of the terminal device, a storage capability parameter of the terminal device, a battery level parameter of the terminal device, a processing delay of the terminal device, an AI model supported by the terminal device, or an AI algorithm supported by the terminal device.

For technical effects brought by the third aspect or some optional implementations, refer to the descriptions of the technical effects of the first aspect or the corresponding implementations.

According to a fourth aspect, a fourth communication method is provided. The method may be performed by a first communication apparatus, may be performed by another device including a function of the first communication apparatus, or may be performed by a chip system (or a chip) or another functional module, where the chip system or the functional module can implement the function of the first communication apparatus, and the chip system or the functional module is, for example, disposed in the first communication apparatus. For example, the first communication apparatus is an access network device, a CU, a CU-CP, or a CU-CP 2. The method includes: sending request information to a terminal device, where the request information indicates an AI function that the terminal device is requested to provide; and receiving third information from the terminal device, where the third information includes a capability parameter corresponding to the AI function indicated by the request information.

In an optional implementation, the request information further indicates to request one or more of the following: a collaboration level corresponding to the AI function provided by the terminal device, a capability corresponding to the AI function provided by the terminal device, an AI algorithm corresponding to the AI function provided by the terminal device, or an AI model corresponding to the AI function provided by the terminal device.

In an optional implementation, the third information further includes one or more of the following: a capability parameter corresponding to the collaboration level indicated by the request information, a capability parameter corresponding to the capability indicated by the request information, a capability parameter corresponding to the AI algorithm indicated by the request information, or a capability parameter corresponding to the AI model indicated by the request information.

In an optional implementation, the first communication apparatus is an access network device; the first communication apparatus is a CU; the first communication apparatus is a CU-CP; the first communication apparatus is an LMF; or the first communication apparatus is an AMF.

In an optional implementation, the first communication apparatus is the CU or the CU-CP, and the method further includes: receiving the request information from a DU; or determining the request information based on second AI function requirement information, where the second AI function requirement information indicates the AI function that the terminal device is requested to provide, or the second AI function requirement information indicates the AI function that the terminal device is requested to provide, and further indicates one or more of the following: the collaboration level corresponding to the AI function provided by the terminal device, the capability corresponding to the AI function provided by the terminal device, the AI algorithm corresponding to the AI function provided by the terminal device, or the AI model corresponding to the AI function provided by the terminal device.

In an optional implementation, if the request information is from the DU, the method further includes: sending the third information to the DU.

In an optional implementation, the third information includes fourth sub-information, where the fourth sub-information indicates a fourth AI function provided by the terminal device and a value of a capability parameter corresponding to the fourth AI function, or the fourth sub-information indicates a fourth AI function provided by the terminal device, and further indicates one or more of the following: a collaboration level corresponding to the fourth AI function, a value of a capability parameter corresponding to the fourth AI function, a capability corresponding to the fourth AI function, an AI algorithm corresponding to the fourth AI function, or an AI model corresponding to the fourth AI function. Alternatively, the third information includes fourth sub-information and includes a maximum value of a capability parameter supported by the terminal device, where the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function.

In an optional implementation, the capability parameter includes one or more of the following: a computing capability parameter of the terminal device, an energy consumption parameter of the terminal device, a storage capability parameter of the terminal device, a battery level parameter of the terminal device, a processing delay of the terminal device, an AI model supported by the terminal device, or an AI algorithm supported by the terminal device.

For technical effects brought by the fourth aspect or the optional implementations, refer to the descriptions of technical effects of the third aspect or the corresponding implementations.

According to a fifth aspect, a communication apparatus is provided. The communication apparatus may be the first communication apparatus according to any one of the first aspect to the fourth aspect. The communication apparatus has a function of the foregoing first communication apparatus. The communication apparatus is, for example, the first communication apparatus, a large device including the first communication apparatus, or a functional module in the first communication apparatus, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive first information, where the first information includes first sub-information, and the first sub-information indicates a first AI function supported by a terminal device. The processing unit is configured to determine second information based on the first information, where the second information indicates an AI function that the terminal device is requested to provide. The transceiver unit (or the sending unit) is configured to send the second information to the terminal device. The transceiver unit (or the receiving unit) is further configured to receive third information from the terminal device, where the third information includes a capability parameter corresponding to the AI function indicated by the second information.

In an optional implementation, the transceiver unit (or the sending unit) is configured to send request information to the terminal device, where the request information indicates the AI function that the terminal device is requested to provide. The transceiver unit (or the receiving unit) is configured to receive third information from the terminal device, where the third information includes a capability parameter corresponding to the AI function indicated by the request information.

In an optional implementation, the communication apparatus further includes a storage unit (sometimes also referred to as a storage module). The processing unit is configured to: be coupled to the storage unit, and execute a program or instructions in the storage unit, so that the communication apparatus is enabled to perform a function of the first communication apparatus according to any one of the first aspect to the fourth aspect.

According to a sixth aspect, a communication apparatus is provided. The communication apparatus may be the terminal device according to any one of the first aspect to the fourth aspect. The communication apparatus has a function of the foregoing terminal device. The communication apparatus is, for example, a terminal device, a large device including the terminal device, or a functional module in the terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the seventh aspect.

In an optional implementation, the transceiver unit (or a receiving unit) is configured to receive second information from a first communication apparatus, where the second information indicates an AI function that the terminal device is requested to provide. The transceiver unit (or a sending unit) is configured to send third information to the first communication apparatus, where the third information includes a capability parameter corresponding to the AI function indicated by the second information.

In an optional implementation, the transceiver unit (or the receiving unit) is configured to receive request information from the first communication apparatus, where the request information indicates the AI function that the terminal device is requested to provide. The processing unit is configured to determine the third information based on the request information and capability information of the terminal device, where the third information includes a capability parameter corresponding to the AI function indicated by the request information. The transceiver unit (or the sending unit) is configured to send the third information to the first communication apparatus.

In an optional implementation, the communication apparatus further includes a storage unit (sometimes also referred to as a storage module). The processing unit is configured to: be coupled to the storage unit, and execute a program or instructions in the storage unit, so that the communication apparatus is enabled to perform a function of the terminal device according to any one of the first aspect to the fourth aspect.

According to a seventh aspect, a communication system is provided, including a first communication apparatus and a terminal device. The first communication apparatus is configured to perform the method performed by the first communication apparatus according to the first aspect or the second aspect, and the terminal device is configured to perform the method performed by the terminal device according to the first aspect or the second aspect. Alternatively, the first communication apparatus is configured to perform the method performed by the first communication apparatus according to the third aspect or the fourth aspect, and the terminal device is configured to perform the method performed by the terminal device according to the third aspect or the fourth aspect.

According to an eighth aspect, a computer-readable storage medium is provided. The computer-readable storage medium is configured to store a computer program or instructions. When the computer program or the instructions are run, the method performed by the first communication apparatus or the terminal device in the foregoing aspects is implemented.

According to a ninth aspect, a computer program product including instructions is provided. When the computer program product is run on a computer, the methods according to the foregoing aspects are implemented.

According to a tenth aspect, a chip system is provided, including a processor and an interface. The processor is configured to: invoke instructions from the interface and run the instructions, so that the chip system implements the methods according to the foregoing aspects.

### BRIEF DESCRIPTION OF DRAWINGS

FIG. 1 is a diagram of a structure of an access network device;
FIG. 2 is a diagram of a framework of AI application in NR;
FIG. 3 is a diagram of a network architecture to which an embodiment of this application is applied;
FIG. 4 is a flowchart of a communication method according to an embodiment of this application;
FIG. 5 is a flowchart of another communication method according to an embodiment of this application;
FIG. 6 is a diagram of an apparatus according to an embodiment of this application; and
FIG. 7 is a diagram of another apparatus according to an embodiment of this application.

### DESCRIPTION OF EMBODIMENTS

Technical solutions provided in embodiments of this application may be applied to a 4th generation (4th generation, 4G) mobile communication technology system, for example, a long term evolution (long term evolution, LTE) system, may be applied to a 5th generation (5th generation, 5G) mobile communication technology system, for example, an NR system, or may be applied to a next generation mobile communication system or another similar communication system, for example, a 6th generation (6th generation, 6G) mobile communication technology system. This is not specifically limited. In addition, the technical solutions provided in embodiments of this application may be further applied to a device-to-device (device-to-device, D2D) scenario, for example, an NR-D2D scenario, or may be applied to a vehicle to everything (vehicle to everything, V2X) scenario, for example, an NR-V2X scenario, or a field like intelligent driving, assisted driving, or intelligent connected vehicles. If the technical solutions are applied to the D2D scenario, both communication parties may be UEs. If the technical solutions are applied to a non-D2D scenario, one party of communication may be a UE, and the other party may be a network device (for example, an access network device), or both communication parties may be network devices. In the following description process, an example in which two communication parties are respectively a network device and a UE is used.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B. At least one of the following items (pieces) or a similar expression thereof refers to any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of obj ects. For example, a first resource unit and a second resource unit may be a same resource unit, or may be different resource units. In addition, this name does not indicate different locations, sizes, application scenarios, priorities, importance degrees, or the like of the two resource units. In addition, step numbers in embodiments described in this application are merely intended to distinguish between different steps, but are not intended to limit a sequence of the steps. For example, S401 may be performed before S402, may be performed after S402, or may be simultaneously performed with S402.

The following describes some terms or concepts in embodiments of this application, to facilitate understanding of a person skilled in the art.
1. In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. For ease of description, an example in which the terminal device is a UE is used below for description.
2. The network device in embodiments of this application is a device in a wireless network, for example, includes a radio access network (radio access network, RAN) node or a radio access network device that connects the terminal device to the wireless network. Currently, examples of some RAN nodes are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), or the like. In a network structure, the RAN node may be a central unit (central unit, CU) or a distributed unit (distributed unit, DU), or the RAN node may include a CU and a DU. It may be understood that the RAN node is divided into the CU and the DU from a perspective of a logical function. The CU is connected to the DU through an F1 interface, and the CU representing a gNB may be connected to a core network through an NG interface. The CU and the DU may be physically separated, or may be deployed together. This is not specifically limited in embodiments of this application. One CU may be connected to one DU, or a plurality of DUs may share one CU, so that costs can be saved and network expansion is easy. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, media access control (media access control, MAC) layer, physical layer (PHY), and the like are deployed on the DU. Embodiments of this application are not completely limited to the foregoing protocol stack splitting manner, and there may be another splitting manner.

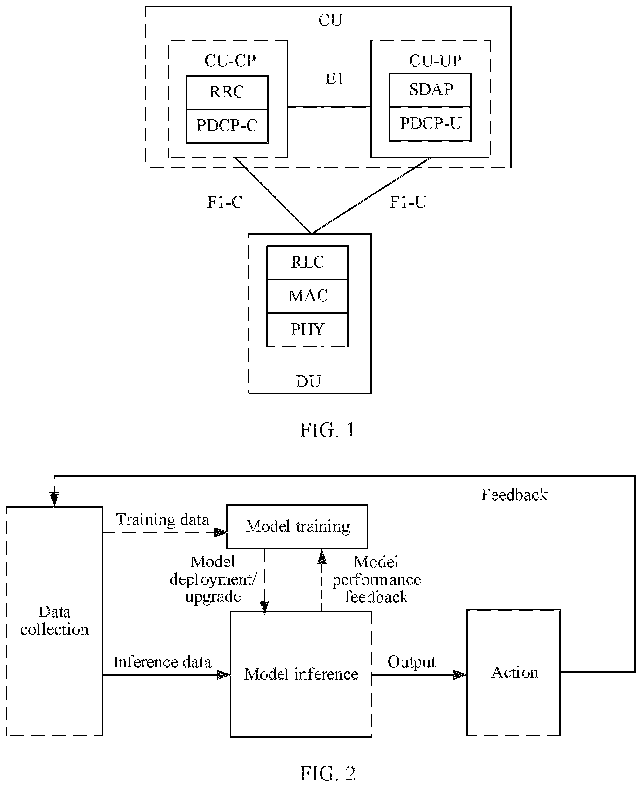

The RAN node in embodiments of this application may alternatively include a central unit control plane (CU-CP) node and/or a central unit user plane (CU-UP) node. Refer to FIG. 1. The CU-CP is responsible for a control plane function, and mainly includes RRC and PDCP-control (control, C). The PDCP-C is mainly responsible for data encryption and decryption, integrity protection, data transmission, and the like on a control plane. The control plane CU-CP of the CU further includes a further split architecture. In other words, an existing CU-CP is further split into a CU-CP 1 and a CU-CP 2. The CU-CP 1 includes various radio resource management functions, and the CU-CP 2 includes only an RRC function and a PDCP-C function (namely, a basic function of control plane signaling at a PDCP layer). The CU-UP is responsible for user plane functions, and mainly includes the SDAP and a PDCP-user (user, U). The SDAP is mainly responsible for processing data of the core network and mapping a flow (flow) to a bearer (bearer). The PDCP-U is responsible for data plane encryption and decryption, integrity protection, header compression, sequence number maintenance, data transmission, and the like. The CU-CP and the CU-UP are connected through an E1 interface. The CU-CP may represent the RAN node, is connected to the core network through the NG interface, and is connected to the DU through an F1-C (control plane). In another possible implementation, the PDCP-C is alternatively disposed on the CU-UP.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used to describe the technical solutions provided in embodiments of this application.

3. Currently, 3GPP proposes that AI can be applied to the NR system to improve network performance and user experience through intelligent data collection and analysis. The 3GPP preliminarily defines a framework for AI application in NR. For details, refer to FIG. 2. A data source (data source) may store data from a gNB, a gNB-CU, a gNB-DU, a UE, or another management entity. The data source may be used as a database for AI model training and data analysis and inference. For example, "data collection" in FIG. 2 may represent the data source. A model training host (model training host) may provide an optimal AI model by analyzing training data (training data) provided by the data source. For example, the "Model training" box in FIG. 2 may represent the model training host. A model inference host (model inference host) uses the AI model to provide, based on the data provided by the data source, AI-based reasonable prediction on network running, or guide a network to perform policy adjustment. For example, the "Model inference" box in FIG. 2 may represent the model inference host. Related policy adjustments are planned by an actor (actor) entity in a unified manner and sent to a plurality of network entities for operation. In addition, after an adjusted policy is applied to the network, specific performance information about the network is input to the data source again for storage.

4. AI model

The AI model is also called an AI algorithm (or an AI operator), is a collective name of mathematical algorithms built based on artificial intelligence principles, and is a basis for solving a specific problem using AI. A type of the AI model is not limited in embodiments of this application. For example, the AI model may be a machine learning model, a deep learning model, or a reinforcement learning model.

Machine learning is a method for implementing the artificial intelligence. An objective of the method is to design and analyze some algorithms (that is, models) that enable a computer to automatically "learn". The designed algorithms may be referred to as machine learning models. The machine learning model is a type of algorithm that automatically analyzes data to obtain a rule and uses the rule to predict unknown data. There are a plurality of machine learning models. For example, the machine learning models may be classified into a supervised learning model and an unsupervised learning model depending on whether a label corresponding to training data needs to be depended during model training.

Deep learning is a new technology field generated in a research process of the machine learning. Specifically, the deep learning is a method for performing in-depth representation learning on data in the machine learning. The deep learning interprets the data by establishing a neural network that simulates a human brain to perform analysis and learning. In a machine learning method, almost all features need to be determined by an industry expert, and then the features are encoded. However, the deep learning algorithm attempts to learn a feature from data. An algorithm designed based on a deep learning idea is called a deep learning model.

Reinforcement learning is a special field in the machine learning, and is a process of continuously learning an optimal policy, making a sequence decision, and obtaining a maximum return through interaction between an agent and environment. In general, the reinforcement learning is to learn "what to do (that is, how to map a current situation to an action) to maximize a digitalized benefit signal". The agent is not told what action to take, but needs to attempt to find out which actions may produce the most generous benefits. The reinforcement learning is different from the supervised learning and unsupervised learning in the machine learning field. The supervised learning is a process (a task-driven type) of learning from externally provided training data with a label, and the unsupervised learning is a process (a data-driven type) of searching for an implicit structure in unlabeled data. The reinforcement learning is a process of finding a better solution through "probing". The agent needs to develop existing experience to gain benefits, as well as to perform probing, so that better action selection space (in other words, learning from a mistake) can be obtained in the future. An algorithm designed based on the reinforcement learning is called a reinforcement learning model.

Any AI model needs to be trained before being used to solve a specific technical problem. AI model training is a process in which the training data is calculated by using a specified initial model, and a parameter in the initial model is adjusted by using a method based on a calculation result, so that the model gradually learns of a rule and has a specific function. After training, an AI model with a stable function can be used for inference. AI model inference is a process of calculating input data by using a trained AI model to obtain a predicted inference result (also referred to as output data).

### 5. AI function, or AI-based use case (use case)

Currently, for an AI application on a RAN side, some basic application scenarios are designed in 3GPP, for example, including channel state information (channel state information, CSI)-reference signal (reference signal, RS) feedback enhancement (feedback enhancement), beam management enhancement (beam management enhancement), or positioning accuracy enhancement (positioning accuracy enhancement). The following briefly describes these scenarios. If a UE supports an AI scenario, it may also be considered that the UE has the AI function.

### (1) CSI-RS feedback enhancement.

CSI is a channel attribute of a communication link, and is channel quality information sent by the UE to an access network device. The UE sends downlink CSI to the access network device, so that the access network device can select a more appropriate modulation and coding scheme (modulation and coding scheme, MCS) for the UE based on the downlink CSI, to better adapt to a transformed radio channel. The CSI sent by the UE may include one or more of the following: a channel quality indicator (channel quality indicator, CQI), a precoding matrix indicator (precoding matrix indicator, PMI), a CSI-RS resource indicator (CSI-RS resource indicator, CRI), an SS/PCH block resource indicator (SS/PBCH block resource indicator, SSBRI), a layer indicator (layer indicator, LI), a rank indicator (rank indicator, RI), or a layer 1 reference signal received power (layer 1 reference signal receiver power, L1-RSRP). The rank (rank) is a rank in an antenna matrix in a multiple-input multiple-output (multiple-input multiple-output, MIMO) solution, and represents one or more parallel valid data streams. The RI indicates a quantity of valid data layers of a physical downlink shared channel (physical downlink shared channel, PDSCH).

The CSI-RS feedback enhancement may further include sub-scenarios such as CSI compression, CSI prediction, and CSI-RS configuration signaling reduction. The CSI compression may further include compression in at least one domain of a space domain, a time domain, or a frequency domain.

The CSI-RS compression is used as an example, an implementation procedure is as follows.

### A1: The access network device first exchanges a dictionary with the UE.

In addition, the access network device trains a model in advance based on factors such as a capability of the UE and a requirement of the access network device. The model includes, for example, an encoder (encoder) model and a corresponding decoder (decoder) model. The access network device may send the encoder model to the UE, and may also send a tool like a quantizer (quantizer) to the UE. The quantizer is configured to perform quantization processing on a compressed signal.

A2: The UE may obtain a first matrix based on a measured downlink channel matrix and an encoder network.

For example, the UE may input the measured downlink channel matrix into the encoder network, to obtain the first matrix output by the encoder network. Alternatively, the UE may preprocess the measured downlink channel matrix, and then input a preprocessed downlink channel matrix into the encoder network, to obtain the first matrix output by the encoder network. Further, the UE may compress the first matrix by using an existing dictionary, and may perform quantization processing on a compressed signal by using the quantizer, and then send a quantization result to the access network device.

A3: The access network device performs reverse restoration to obtain an original downlink channel matrix based on the dictionary, the decoder network, and the quantization result from the UE.

### (2) Beam management enhancement

AI-based beam management enhancement may include sub-scenarios such as beam scanning matrix prediction and optimal beam prediction. An implementation procedure of the beam management enhancement is as follows.

B1: Generate an initial model. A specific quantity of UEs perform omnidirectional beam scanning on a synchronization signal and physical broadcast channel (physical broadcast channel, PBCH) block (synchronization signal and PBCH block, SSB), and these UEs may send scanning results to the access network device. The scanning results include, for example, received signal quality information on each beam. The access network device may perform training based on the scanning results of these UEs, to obtain a sparse scanning matrix, or referred to as a sparse model. This type of matrix is usually unique to a cell. The sparse model may include information about a better beam.

B2: The access network device sends the sparse model to the UE (it may be considered to send in a manner of a system information block (system information block, SIB) message or the like), the UE may perform beam scanning in a P1 phase based on the sparse matrix, and the UE may send a scanning result to the access network device. The scanning result is, for example, referred to as a sparse scanning result. In the P1 phase, the access network device sends a reference signal in a wide range by using a beam, and the UE selects an optimal beam based on measurement, and sends information about the optimal beam to the access network device.

B3: The access network device obtains the optimal beam based on the sparse scanning result.

For example, the access network device may perform P2 scanning on the UE based on the beam, and the UE may send an identifier of the optimal beam to the access network device. The P2 scanning means that the access network device sends the reference signal in a narrow range by using a narrow beam, and the UE selects an optimal beam based on measurement, and sends information about the optimal beam to the access network device.

### (3) Positioning accuracy enhancement

AI-based positioning accuracy enhancement is for improving a positioning accuracy. An implementation procedure of the positioning accuracy enhancement is as follows.

C1: Collect original data by using a reference (reference) UE controlled by an operator. The original data includes, for example, information such as coordinate information of the UE and/or a line of sight (line of sight, LOS)/non-line of sight (non-line of sight, NLOS) status.

C2: A location management function (location management function, LMF) and the access network device separately train a model. A model trained by the LMF may be used to infer final positioning information of the UE (for example, information such as a longitude and a latitude of the UE) based on the original data, and a model trained by a gNB may be used to infer a LOS/NLOS determining result based on the original data.

### 6. Collaboration level (collaboration level) of the AI function

Considering factors such as application of the AI function (for example, deployment of the AI model) and interaction between the UE and a network side, currently, three collaboration levels may be included: a level 0 (level 0), a level 1 (level 1), and a level 2 (level 2), and are separately described below.

The level 0 may also be referred to as a collaboration level 0, and is a no collaboration (no collaboration) level.

At the level 0, an AI model on an access network device side is completely invisible to the UE, processes such as training and inference of the AI model are completed inside the access network device, and there is no impact on an air interface.

The level 1 may also be referred to as a collaboration level 1, and is a signaling-based collaboration without model interaction (signaling-based collaboration without model transfer) level.

At the level 1, the access network device sends a dictionary to the UE, so that the UE can assist the access network device in performing AI inference. The air interface is affected. The AI model may also be deployed inside the UE, and the UE may perform compression encoding on the downlink channel matrix based on the AI model deployed by the UE and the dictionary. The UE and the access network device may jointly train the AI model, for example, train the AI model in a federated learning manner. On the air interface, transmission of the AI model is not directly performed between the UE and the access network device, but transmission of a parameter related to the AI model may be performed. In addition, considering the deployment of the AI model, the level 1 can be further divided into a level 1A and a level 1B.

The level 1A is signaling-based collaboration for single-sided node deployment model without model interaction (signaling-based collaboration for single-sided model without model transfer). At the level 1A, the AI model may be deployed in the access network device or the UE. In other words, the AI model is deployed on a single side.

The level 1B is signaling-based collaboration for two-sided node deployment model without model interaction (signaling-based collaboration for two-sided model without model transfer) At the level 1A, the access network device and the UE may separately deploy the AI model. In other words, the AI model is deployed on two sides.

The level 2 may also be referred to as a collaboration level 2, and is a signaling-based collaboration with model interaction (signaling-based collaboration with model transfer) level.

At the level 2, both the access network device and the UE may have an AI function. For example, the access network device and the UE may separately deploy the AI model, and the access network device and the UE may separately perform a process like inference based on the deployed AI model. On the air interface, the access network device and the UE can directly perform transmission of the AI model.

In addition to the foregoing three collaboration levels, another collaboration level may be further included. For example, a future communication system may further support some collaboration levels. This is not limited in embodiments of this application.

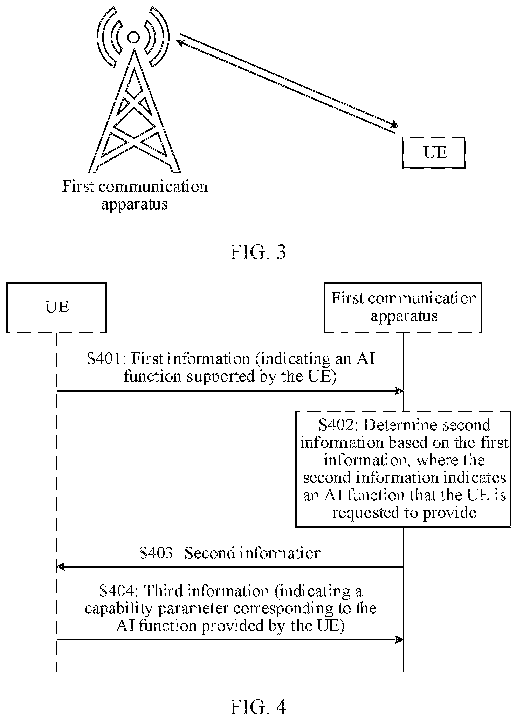

For example, FIG. 3 shows a communication network architecture to which an embodiment of this application is applicable. A first communication apparatus can communicate with a UE. For example, the UE may send AI capability information of the UE to the first communication apparatus. The first communication apparatus is, for example, an access network device; the first communication apparatus is a functional module included in an access network device, for example, a CU, a CU-CP, or a CU-CP 2; or the first communication apparatus is a large device including an access network device. The access network device is, for example, the foregoing RAN node. For descriptions of the RAN node and the UE, refer to the foregoing descriptions. Alternatively, the first communication apparatus is, for example, a core network device; the first communication apparatus is a functional module included in a core network device; or the first communication apparatus is a large device including a core network device. The core network device is, for example, an LMF or an access and mobility management function (access and mobility management function, AMF).

To better describe embodiments of this application, the following describes methods provided in embodiments of this application with reference to the accompanying drawings. In the accompanying drawings corresponding to embodiments of this application, all steps represented by using dashed lines are optional steps.

An embodiment of this application provides a communication method. FIG. 4 is a flowchart of the method. The method may be applied to the network architecture shown in FIG. 3. For example, a UE in the method is the UE in FIG. 3, and a first communication apparatus in the method is the first communication apparatus in FIG. 3.

S401: The UE sends first information to the first communication apparatus, and correspondingly, the first communication apparatus receives the first information from the UE. Alternatively, a second communication apparatus sends first information to the first communication apparatus, and correspondingly, the first communication apparatus receives the first information from the second communication apparatus. The second communication apparatus is, for example, a neighboring access network device of the first communication apparatus, or a core network device. In FIG. 4, an example in which the first information is from the UE is used.

The first information may also be referred to as AI capability support information, or may have another name. For example, the first information includes M pieces of sub-information, where M is a positive integer. Optionally, the first information may indicate one or more of the following: an AI function supported by the UE, a collaboration level corresponding to the AI function supported by the UE, a capability corresponding to the AI function supported by the UE, an AI algorithm corresponding to the AI function supported by the UE, or an AI model corresponding to the AI function supported by the UE. For example, each piece of sub-information in the M pieces of sub-information may indicate one or more of the foregoing items. For example, one piece of sub-information in the M pieces of sub-information is first sub-information, and the first sub-information may indicate one or more of the following: a first AI function supported by the UE, a collaboration level corresponding to the first AI function supported by the UE, a capability corresponding to the first AI function supported by the UE, an AI algorithm corresponding to the first AI function supported by the UE, or an AI model corresponding to the first AI function supported by the UE. In embodiments of this application, a capability corresponding to an AI function or an AI sub-function may include a capability related to an AI model and/or an AI service, for example, including one or more of capabilities such as training, inference, or monitoring. "Training" means training of an AI model corresponding to an AI function or an AI sub-function supported by a network device. "Inference" means inference of the AI model corresponding to the AI function or sub-function supported by the network device. "Monitoring" means monitoring of the AI model corresponding to the AI function or sub-function supported by the network device.

In the M pieces of sub-information, items indicated by different sub-information may be the same, partially the same, or completely different. For example, each piece of sub-information in the M pieces of sub-information may indicate one AI function supported by the UE and a collaboration level corresponding to the AI function. Alternatively, each piece of sub-information in some of the M pieces of sub-information may indicate one AI function supported by the UE and a collaboration level corresponding to the AI function, and each piece of sub-information in remaining sub-information indicates one AI function supported by the UE, but does not indicate a collaboration level. For example, one piece of sub-information in the M pieces of sub-information is the first sub-information, and the first sub-information may indicate the first AI function supported by the UE and indicate the collaboration level corresponding to the first AI function. A collaboration level indicated by one piece of sub-information in the M pieces of sub-information may be a collaboration level that can be supported by the UE for an AI function indicated by the sub-information. A capability indicated by one piece of sub-information in the M pieces of sub-information may be a capability that is requested and that can be supported by the UE for an AI function indicated by the sub-information. An AI algorithm indicated by one piece of sub-information in the M pieces of sub-information may be an AI algorithm that is requested and that can be supported by the UE for an AI function indicated by the sub-information. An AI model indicated by one piece of sub-information in the M pieces of sub-information may be an AI model that is requested and that can be supported by the UE for an AI function indicated by the sub-information.

In the M pieces of sub-information, content of a same item indicated by different sub-information may be the same or different. For example, each piece of sub-information in the M pieces of sub-information indicates an AI function, and AI functions indicated by different sub-information may be the same or may be different. If each piece of sub-information in the M pieces of sub-information indicates an AI function, and different sub-information indicates different AI functions, it is equivalent to describing a case in which the M pieces of sub-information may indicate M AI functions supported by the UE.

An AI function indicated by one piece of sub-information in the M pieces of sub-information may include at least one sub-function, in other words, the AI function may be considered as a general AI function, and the AI function further includes at least one sub-function; and/or an AI function indicated by another piece of sub-information in the M pieces of sub-information may be one sub-function included in one AI function. For example, an AI function is a CSI-RS feedback enhancement function, may be referred to as a CSI function for short, and may be represented by "CSI". The CSI function may include at least one sub-function. For example, one sub-function is CSI-1, another sub-function is CSI-2, and still another sub-function is CSI-3. The CSI-1 function is, for example, a CSI compression function, the CSI-2 function is, for example, a CSI prediction function, and the CSI-3 function is, for example, a CSI-RS configuration signaling reduction function. For another example, another AI function is a BM function. The BM function is, for example, a beam management function. The beam management function is, for example, the foregoing beam management enhancement function, and may be represented by "BM". For still another example, still another AI function is a positioning function, for example, a PA function. The PA function is, for example, the foregoing positioning accuracy enhancement function, and may be represented by "PA".

For example, if the first information indicates an AI function supported by the UE, the first information may indicate [an AI function] supported by the UE and [a sub-function] supported by the UE. For example, one piece of sub-information in the M pieces of sub-information may indicate [an AI function 1], and another piece of sub-information in the M pieces of sub-information may indicate [a sub-function 1]. For example, sub-information 1 in the M pieces of sub-information indicates [the CSI-1], sub-information 2 in the M pieces of sub-information indicates [the CSI-2], and sub-information 3 in the M pieces of sub-information indicates [the BM]. Alternatively, the first information may indicate [the AI function] supported by the UE, but does not indicate [the sub-function] supported by the UE. For example, the sub-information 1 in the M pieces of sub-information indicates [the CSI], and the sub-information 2 in the M pieces of sub-information indicates [the BM]. Alternatively, the first information may indicate [the sub-function] supported by the UE, but does not indicate [the AI function] supported by the UE. For example, the sub-information 1 in the M pieces of sub-information indicates [the CSI-1], and the sub-information 2 in the M pieces of sub-information indicates [the CSI-2].

For another example, if the first information indicates a supported AI function and a collaboration level corresponding to the AI function supported by the UE, the first information may indicate one or more of the following: [the AI function] supported by the UE, [the sub-function] supported by the UE, [the AI function and a collaboration level] supported by the UE, or [the sub-function and a collaboration level] supported by the UE. For example, the M pieces of sub-information may include one or more of the following sub-information: sub-information indicating [the AI function 1], sub-information indicating [the sub-function 1], sub-information indicating [the AI function 1 and the collaboration level], or sub-information indicating [the sub-function 1 and the collaboration level]. For example, the sub-information 1 in the M pieces of sub-information indicates [the CSI-1 and a collaboration level 1], the sub-information 2 in the M pieces of sub-information indicates [the CSI-2 and the collaboration level 1], and the sub-information 3 in the M pieces of sub-information indicates [the BM and a collaboration level 2]. For another example, the sub-information 1 in the M pieces of sub-information indicates [the CSI-1], the sub-information 2 in the M pieces of sub-information indicates [the CSI-2], and the sub-information 3 in the M pieces of sub-information indicates [the BM and the collaboration level 2].

For another example, the first information indicates one or more of a supported AI function, a collaboration level corresponding to the AI function supported by the UE, a capability corresponding to the AI function supported by the UE, an AI algorithm corresponding to the AI function supported by the UE, or an AI model corresponding to the AI function supported by the UE. For example, sub-information 1 in the first information may indicate (or include) one or more of the following: an AI function [a CSI-RS feedback enhancement function, beam management, and positioning], an AI sub-function [the CSI-1 and the CSI-2], a collaboration level [a collaboration level 0/a collaboration level 1A/a collaboration level 1B/the collaboration level 2], a capability [training, inference, and monitoring] corresponding to the AI sub-function, an AI algorithm [identifiers (identifiers, IDs)], or an AI model [IDs].

A relationship between elements in each square bracket (that is, []) may be an "and/or" relationship, or may be understood as a relationship including one or more of the elements. For example, that the sub-information 1 indicates the AI function [the CSI-RS feedback enhancement function, the beam management, and the positioning] may be understood as that the AI function indicated by the sub-information 1 may include one or more of the CSI-RS feedback enhancement function, the beam management, or the positioning.

S402: The first communication apparatus determines second information based on the first information. The second information may indicate one or more of the following: an AI function that the UE is requested (expected or hoped) to provide, a collaboration level corresponding to the AI function that the UE is requested (expected or hoped) to provide, a capability corresponding to the AI function that the UE is requested (expected or hoped) to provide, an AI algorithm corresponding to the AI function that the UE is requested (expected or hoped) to provide, or an AI model corresponding to the AI function that the UE is requested (expected or hoped) to provide.

It may be understood as that the second information may indicate an AI capability that a network side actually needs the UE to provide.

There may be a plurality of manners in which the first communication apparatus determines the second information based on the first information. The following provides examples for description.

### 1. First manner in which the first communication apparatus determines the second information

Optionally, a network element that needs the UE to provide an AI capability is, for example, a DU, and the first communication apparatus is, for example, a CU, a CU-CP, or a CU-CP 2. In this case, a manner in which the first communication apparatus determines the second information based on the first information is as follows: The first communication apparatus sends the first information to the DU, and the DU may send determined second information to the first communication apparatus, so that the first communication apparatus determines the second information. In this case, the DU obtains the second information. For example, the DU may determine the second information based on first AI function requirement information and the first information. The first AI function requirement information may indicate an AI capability that the DU needs the UE to provide. In embodiments of this application, the network element that needs the UE to provide the AI capability includes, for example, an access network element and/or a core network element. The access network element is, for example, an access network device or a DU, and the core network element includes, for example, an LMF and/or an AMF, or may include another core network element. In examples of embodiments of this application, an example in which the network element that needs the UE to provide the AI capability is the DU is used. However, this is not actually limited thereto. In other words, replacement may alternatively be performed on the network element that needs the UE to provide the AI capability from the DU to another network element.

The first AI function requirement information includes, for example, N pieces of sub-information, where N is a positive integer. Optionally, the first AI function requirement information may indicate one or more of the following: an AI function that the DU requests (expects or hopes) the UE to provide, a collaboration level corresponding to the AI function that the DU requests the UE to provide, a capability corresponding to the AI function that the DU requests the UE to provide, an AI algorithm corresponding to the AI function that the DU requests the UE to provide, or an AI model corresponding to the AI function that the DU requests the UE to provide. For example, the first AI function requirement information indicates the AI function that the DU requests the UE to provide, and each piece of sub-information in the N pieces of sub-information may indicate one AI function that the DU requests the UE to provide. For example, one piece of sub-information in the N pieces of sub-information is second sub-information, and the second sub-information may indicate a second AI function that the DU requests the UE to provide. In the N pieces of sub-information, items indicated by different sub-information may be the same, partially the same, or completely different. In addition, in the E pieces of sub-information, content of a same item indicated by different sub-information may be the same or different. For this, refer to the descriptions of the M pieces of sub-information in S401.

An AI function indicated by one piece of sub-information in the N pieces of sub-information may include at least one sub-function; and/or an AI function indicated by another piece of sub-information in the N pieces of sub-information may be one sub-function included in one AI function. For descriptions of this part of content, further examples, and the like, refer to the descriptions of the first information in S401.

There may be a plurality of implementations in which the DU determines (filters or screens) the second information based on the first AI function requirement information and the first information. The following provides some examples, but is not limited to the following examples. The DU may determine the second information in one or more of the following Manner A to Manner F.

Manner A: If there is an intersection set between the N pieces of sub-information and the M pieces of sub-information, and the intersection set includes one or more pieces of sub-information, the DU may determine that the second information includes the intersection set.

For example, the first AI function requirement information includes the sub-information 1 and the sub-information 2, where the sub-information 1 indicates [the CSI-1 and the collaboration level 1], and the sub-information 2 indicates [the BM and the collaboration level 2]. The first information includes the sub-information 3, sub-information 4 and sub-information 5, where the sub-information 3 indicates [the CSI-1 and the collaboration level 1], the sub-information 4 indicates [the CSI-3 and the collaboration level 1], and the sub-information 5 indicates [the BM and the collaboration level 2]. The sub-information 1 is the same as the sub-information 3, and the sub-information 2 is the same as the sub-information 5. Therefore, the sub-information 1 and the sub-information 2 are an intersection set of the first AI function requirement information and the first information, so that the DU can determine that the second information includes the sub-information 1 and the sub-information 2.

Manner B: If the first AI function requirement information and the first information have pieces of sub-information that do not completely overlap, the second information may be determined depending on whether the UE supports a collaboration level.

For example, the first information includes the foregoing first sub-information, and the first AI function requirement information includes the foregoing second sub-information. The first sub-information indicates the first AI function supported by the UE, and indicates that the collaboration level corresponding to the first AI function is a first level. The second sub-information indicates the second AI function that the DU requests the UE to provide, and indicates that a collaboration level corresponding to the second AI function is a second level. If the first AI function and the second AI function are a same AI function, and the first level is different from the second level, it indicates that the first sub-information and the second sub-information are pieces of sub-information that do not completely overlap. In this case, if that the UE supports the first level includes supporting the second level, or it is understood as that the UE can support the second level provided that the UE can support the first level, the second information may include the first sub-information. For example, the first level is higher than the second level. If it is specified that a UE supporting a high collaboration level can also support a low collaboration level, the UE can support the second level provided that the UE can support the first level.

Alternatively, if that the UE supports the first level does not include supporting the second level, or it is understood as that when the UE has a capability of supporting the first level, it does not indicate that the UE also has a capability of supporting the second level, the second information may include neither the first sub-information nor the second sub-information. For example, the first level is lower than the second level. If it is specified that a UE supporting the low collaboration level does not necessarily support the high collaboration level, the UE may not necessarily support the second level when supporting the first level. For another example, the first level is higher than the second level. However, if it is specified that a UE with the high collaboration level does not support (or does not necessarily support) the low collaboration level, the UE may not necessarily support the second level when supporting the first level.

For example, the first AI function requirement information includes the sub-information 1 and the sub-information 2, where the sub-information 1 indicates [the CSI-1 and the collaboration level 1], and the sub-information 2 indicates [the BM and the collaboration level 2]}. The first information includes the sub-information 3 to the sub-information 5, where the sub-information 3 indicates [the CSI-1 and the collaboration level 2], the sub-information 4 indicates [the CSI-3 and the collaboration level 1], and the sub-information 5 indicates [the BM and the collaboration level 2]. The sub-information 2 is the same as the sub-information 5, and the sub-information 1 and the sub-information 3 are pieces of sub-information that do not completely overlap. For example, the collaboration level 2 is higher than the collaboration level 1. If it is specified in a related standard that an AI function with the high collaboration level may support an AI function with the low collaboration level, the second information may include the sub-information 1 and the sub-information 5. Alternatively, if it is specified in the related standard that the AI function with the high collaboration level cannot support the AI function with the low collaboration level, the second information may include the sub-information 5 but does not include the sub-information 3.

Manner C: If one piece of sub-information in the first information indicates a complete AI function (or a general AI function, to be specific, the AI function includes at least one sub-function), and one piece of sub-information in the first AI function requirement information indicates one AI sub-function of the AI function, the second information may include the sub-information in the first AI function requirement information.

For example, the first information includes the foregoing first sub-information, and the first AI function requirement information includes the foregoing second sub-information. The first sub-information indicates the first AI function supported by the UE, and optionally further indicates that the collaboration level corresponding to the first AI function is the first level. The second sub-information indicates the second AI function that the DU requests the UE to provide, and optionally further indicates that the collaboration level corresponding to the second AI function is the second level. If the first AI function includes the second AI function, or the second AI function is one sub-function of the first AI function, the second information may include the second sub-information.

For example, the first AI function requirement information includes the sub-information 1, where the sub-information 1 indicates [the CSI-1 and the collaboration level 1]. The first information includes the sub-information 2 to the sub-information 4, where the sub-information 2 indicates [the CSI and the collaboration level 1], the sub-information 3 indicates [the CSI-3 and the collaboration level 2], and the sub-information 4 indicates [the BM and the collaboration level 2]. The sub-information 2 indicates a CSI function, and the sub-information 1 indicates one sub-function (the CSI-1) of the CSI function. In this case, the second information may include the sub-information 1.

Manner D: If one piece of sub-information in the first AI function requirement information indicates a complete AI function (or a general AI function, to be specific, the AI function includes at least one sub-function), and one piece of sub-information in the first information indicates one AI sub-function of the AI function, the second information may include the sub-information in the first information. In this case, although the UE cannot provide a complete AI function needed by the DU, the UE can provide a part of the AI function needed by the DU.

For example, the first information includes the foregoing first sub-information, and the first AI function requirement information includes the foregoing second sub-information. The first sub-information indicates the first AI function supported by the UE, and optionally further indicates that the collaboration level corresponding to the first AI function is the first level. The second sub-information indicates the second AI function that the DU requests the UE to provide, and optionally further indicates that the collaboration level corresponding to the second AI function is the second level. If the second AI function includes the first AI function, or the first AI function is one sub-function of the second AI function, the second information may include the first sub-information.

For example, the first information includes the sub-information 1, where the sub-information 1 indicates [the CSI-1 and the collaboration level 1]. The first AI function requirement information includes the sub-information 2 to the sub-information 4, where the sub-information 2 indicates [the CSI and the collaboration level 1], the sub-information 3 indicates [the CSI-3 and the collaboration level 2], and the sub-information 4 indicates [the BM and the collaboration level 2]. The sub-information 2 indicates a CSI function, and the sub-information 1 indicates one sub-function (the CSI-1) of the CSI function. In this case, the second information may include the sub-information 1.

For another example, the first AI function requirement information includes the sub-information 1 and the sub-information 2, where the sub-information 1 indicates [the CSI, the collaboration level 0, and the collaboration level 2, the inference and training, and [an AI algorithm 1 and an AI model 1]], and the sub-information 2 indicates [the beam management, the collaboration level 2, the training and inference, [the AI algorithm 1, the AI model 1, and an AI model 2], and [an AI algorithm 2 and the AI model 2]]. The first information includes the sub-information 3 and the sub-information 4, where the sub-information 3 indicates [the CSI-1, the collaboration level 0, the inference, and [the AI algorithm 1, the AI model 1, and the AI model 2]], and the sub-information 4 indicates [the beam management, the collaboration level 0, the inference, and [the AI algorithm 2 and the AI model 2]]. The CSI-1 is one sub-function of the CSI, and the second information may include [the CSI-1, the collaboration level 0, the inference, and [the AI algorithm 1 and the AI model 1]]. This example may also be used as an example of Manner B. Manner A to Manner F in this embodiment of this application may be separately applied, or any two or more of the manners may be combined for application.

Manner E: If a piece of sub-information in the first information does not indicate a collaboration level, it may be considered by default that the UE can support all collaboration levels for an AI function indicated by the sub-information.

For example, the first information includes the foregoing first sub-information, and the first AI function requirement information includes the foregoing second sub-information. The first sub-information indicates the first AI function supported by the UE, but does not indicate the collaboration level corresponding to the first AI function. The second sub-information indicates the second AI function that the DU requests the UE to provide, and optionally further indicates that the collaboration level corresponding to the second AI function is the second level. If the first AI function and the second AI function are a same AI function, the second information may include the second sub-information.

For example, the first AI function requirement information includes the sub-information 1 and the sub-information 2, where the sub-information 1 indicates [the CSI-1 and the collaboration level 1], and the sub-information 2 indicates [the BM and the collaboration level 2]. The first information includes the sub-information 3 and the sub-information 4, where the sub-information 3 indicates [the CSI-1], and the sub-information 4 indicates [the BM and the collaboration level 2]. The sub-information 2 and the sub-information 4 are the same. In addition, the sub-information 2 does not indicate a collaboration level corresponding to the CSI-1, and it indicates that the UE can support all collaboration levels for the CSI-1. In this case, the UE supports the collaboration level 1. Therefore, the second information may include the sub-information 1 and the sub-information 2.

Manner F: If there is no intersection set between the first AI function requirement information and the first information, the second information is empty, or the second information cannot be obtained.

For example, the first AI function requirement information includes the sub-information 1, where the sub-information 1 indicates [the CSI-1 and the collaboration level 1]. The first information includes the sub-information 2 and the sub-information 3, where the sub-information 2 indicates [the CSI-2 and the collaboration level 1], and the sub-information 3 indicates [the BM and the collaboration level 2]. It can be learned that there is no intersection set between sub-information included in the first AI function requirement information and sub-information included in the first information. Therefore, the second information is empty, or the second information cannot be obtained.

Alternatively, Manner F may be implemented as follows: If none of Manner A to Manner E is met, the second information is empty, or the second information cannot be obtained.

### 2. Second manner in which the first communication apparatus determines the second information

Optionally, a network element that needs the UE to provide an AI capability is, for example, a DU, and the first communication apparatus is, for example, a CU, a CU-CP, or a CU-CP 2. In this case, a manner in which the first communication apparatus determines the second information based on the first information is as follows: The DU sends the first AI function requirement information to the first communication apparatus, and the first communication apparatus may determine the second information based on the first AI function requirement information and the first information. In this case, the first communication apparatus obtains the second information. For a manner in which the first communication apparatus determines the second information based on the first AI function requirement information and the first information, refer to the foregoing descriptions of the manner in which the DU determines the second information.

### 3. Third manner in which the first communication apparatus determines the second information

Optionally, a network element that needs the UE to provide an AI capability is, for example, a CU, a CU-CP, or a CU-CP 2, and the first communication apparatus is, for example, a CU, a CU-CP, or a CU-CP 2. It may be understood as that the network element that needs the UE to provide the AI capability is the first communication apparatus. In this case, a manner in which the first communication apparatus determines the second information based on the first information is as follows: The first communication apparatus may determine the second information based on second AI function requirement information and the first information. The second AI function requirement information may indicate one or more of the following: an AI capability that the first communication apparatus needs the UE to provide, a collaboration level corresponding to the AI function that the first communication apparatus needs the UE to provide, a capability corresponding to the AI function that the first communication apparatus needs the UE to provide, an AI algorithm corresponding to the AI function that the first communication apparatus needs the UE to provide, or an AI model corresponding to the AI function that the first communication apparatus needs the UE to provide.

The second AI function requirement information includes, for example, K pieces of sub-information, where K is a positive integer. Each piece of sub-information in the K pieces of sub-information may indicate one or more of the following: the AI capability that the first communication apparatus needs the UE to provide, the collaboration level corresponding to the AI function that the first communication apparatus needs the UE to provide, the capability corresponding to the AI function that the first communication apparatus needs the UE to provide, the AI algorithm corresponding to the AI function that the first communication apparatus needs the UE to provide, or the AI model corresponding to the AI function that the first communication apparatus needs the UE to provide. Optionally, the second AI function requirement information indicates an AI function that the first communication apparatus requests the UE to provide. In this case, each piece of sub-information in the K pieces of sub-information may indicate one AI function that the first communication apparatus requests the UE to provide. For example, one piece of sub-information in the K pieces of sub-information is third sub-information, and the third sub-information may indicate a third AI function that the first communication apparatus requests the UE to provide.

In the K pieces of sub-information, items indicated by different sub-information may be the same, partially the same, or completely different. In addition, in the K pieces of sub-information, content of a same item indicated by different sub-information may be the same or different. For this, refer to the descriptions of the M pieces of sub-information in S401.

An AI function indicated by one piece of sub-information in the K pieces of sub-information may include at least one sub-function; and/or an AI function indicated by another piece of sub-information in the K pieces of sub-information may be one sub-function included in one AI function. For descriptions of this part of content, further examples, and the like, refer to the descriptions of the first information in S401.

For a manner in which the first communication apparatus determines the second information based on the second AI function requirement information and the first information, refer to the foregoing descriptions of the manner in which the DU determines the second information.

The foregoing describes several manners in which the first communication apparatus determines the second information based on the first information. In addition to the foregoing manners, a solution in which the first communication apparatus determines the second information in another manner also falls within the protection scope of embodiments of this application.

If the second information determined by the first communication apparatus or the DU is empty, or the first communication apparatus or the DU does not determine the second information, S403 and S404 may not need to be performed.

S403: The first communication apparatus sends the second information to the UE. Correspondingly, the UE receives the second information from the first communication apparatus.

S404: The UE sends third information to the first communication apparatus. Correspondingly, the first communication apparatus receives the third information from the UE. The third information may include (or indicate) one or more of the following: a value of a capability parameter corresponding to an AI function indicated by the second information (or the third information may include a capability parameter corresponding to the AI function provided by the UE), a value of a capability parameter corresponding to a collaboration level indicated by the second information (or the third information may include a capability parameter corresponding to the collaboration level of the AI function provided by the UE), a value of a capability parameter corresponding to a capability indicated by the second information (or the third information may include a capability parameter corresponding to the capability corresponding to the AI function provided by the UE), a value of a capability parameter corresponding to an AI algorithm indicated by the second information (or the third information may include a capability parameter corresponding to the AI algorithm corresponding to the AI function provided by the UE), or a value of a capability parameter corresponding to an AI model indicated by the second information (or the third information may include a capability parameter corresponding to the AI model corresponding to the AI function provided by the UE).

Optionally, the capability parameter may include one or more of the following: a computing capability parameter, a storage capability parameter of the UE, a battery level parameter of the UE, a processing delay of the UE, an AI model supported by the UE, an energy consumption parameter, or an AI algorithm supported by the UE.

For example, the third information may include H pieces of sub-information, where H is a positive integer. Each piece of sub-information in the H pieces of sub-information may indicate one or more of the following: the value of the capability parameter corresponding to the AI function indicated by the second information, the value of the capability parameter corresponding to the collaboration level indicated by the second information, the value of the capability parameter corresponding to the capability indicated by the second information, the value of the capability parameter corresponding to the AI algorithm indicated by the second information, or the value of the capability parameter corresponding to the AI model indicated by the second information. In the H pieces of sub-information, items indicated by different sub-information may be the same, partially the same, or completely different. In the H pieces of sub-information, content of items indicated by different sub-information may be the same or different. For this, refer to the related descriptions of the M pieces of sub-information in S401.

In an optional implementation, each piece of sub-information in the H pieces of sub-information may indicate one or more items described in the foregoing paragraph. In addition, the third information may further indicate the AI function provided by the UE. In this case, each piece of sub-information in some or all of the H pieces of sub-information may indicate one or more of the following: one AI function provided by the UE, a collaboration level corresponding to the AI function, a capability corresponding to the AI function, an AI algorithm corresponding to the AI function, an AI model corresponding to the AI function, or a value of a capability parameter corresponding to the AI function. For example, one piece of sub-information in the H pieces of sub-information is fourth sub-information, and the fourth sub-information may indicate one or more of the following: a fourth AI function provided by the UE, a collaboration level corresponding to the fourth AI function, a capability corresponding to the fourth AI function, an AI algorithm corresponding to the fourth AI function, an AI model corresponding to the fourth AI function, or a value of a capability parameter corresponding to the fourth AI function. In the H pieces of sub-information, items indicated by different sub-information may be the same. For example, all the sub-information indicates one AI function provided by the UE and a collaboration level corresponding to the AI function. Alternatively, items indicated by different sub-information may be different. For example, one piece of sub-information in the H pieces of sub-information indicates one AI function provided by the UE and a collaboration level corresponding to the AI function, and another piece of sub-information in the H pieces of sub-information indicates one AI function provided by the UE, a capability corresponding to the AI function, and an AI algorithm corresponding to the AI function, but does not indicate a collaboration level corresponding to the AI function.

For example, each piece of sub-information in the H pieces of sub-information may indicate a value of a capability parameter provided by the UE for an AI function indicated by the sub-information. In this manner, a capability parameter of each AI function is clearly indicated. In addition, the third information may further indicate the AI function provided by the UE. In this case, each piece of sub-information in the H pieces of sub-information may indicate one AI function provided by the UE and a value of a corresponding capability parameter. For example, one piece of sub-information in the H pieces of sub-information is the fourth sub-information, and the fourth sub-information may indicate the fourth AI function provided by the UE and the value of the capability parameter corresponding to the fourth AI function.

Alternatively, the third information may further indicate the AI function provided by the UE and the collaboration level corresponding to the AI function provided by the UE. In this case, each piece of sub-information in the H pieces of sub-information may indicate one AI function provided by the UE, a collaboration level corresponding to the AI function, and a value of a capability parameter corresponding to the AI function. Alternatively, each piece of sub-information in some of the H pieces of sub-information may indicate one AI function provided by the UE, a collaboration level corresponding to the AI function, and a value of a capability parameter corresponding to the AI function, and each piece of sub-information in the remaining sub-information indicates one AI function provided by the UE and a value of a capability parameter corresponding to the AI function, but does not indicate a collaboration level. For example, one piece of sub-information in the H pieces of sub-information is the fourth sub-information, and the fourth sub-information may indicate the fourth AI function provided by the UE, the collaboration level corresponding to the fourth AI function, and the value of the capability parameter corresponding to the fourth AI function. A collaboration level indicated by one piece of sub-information in the H pieces of sub-information may be a collaboration level supported by the UE for an AI function indicated by the sub-information.

For example, the second information includes the sub-information 1 and the sub-information 2, where the sub-information 1 indicates [the CSI-1 and the collaboration level 1], and the sub-information 2 indicates [the BM and the collaboration level 2]}. In this case, the third information may include the sub-information 3 and the sub-information 4, where the sub-information 3 indicates [the CSI-1, the collaboration level 1, a storage capability requirement a1, a computing capability requirement b1, a battery level requirement c1, processing delay information d1, AI model information e1, and others], and the sub-information 4 indicates [the BM, the collaboration level 2, a storage capability requirement a2, a computing capability requirement b2, a battery level requirement c2, processing delay information d2, AI model information e2, and others].

In another optional implementation, each piece of sub-information in the H pieces of sub-information does not indicate a value of a capability parameter provided by the UE for an AI function indicated by the sub-information, but the third information may further include a maximum value of a capability parameter supported by the UE in addition to the H pieces of sub-information. In this manner, the third information does not need to include a value of a capability parameter for a plurality of times, so that transmission overheads of the third information can be reduced. In addition, in this manner, the third information may further indicate the AI function provided by the UE. In this case, each piece of sub-information in some or all of the H pieces of sub-information may indicate one or more of the following: one AI function provided by the UE, a collaboration level corresponding to the AI function, a capability corresponding to the AI function, an AI algorithm corresponding to the AI function, or an AI model corresponding to the AI function. For example, one piece of sub-information in the H pieces of sub-information is the fourth sub-information, and the fourth sub-information may indicate one or more of the following: the fourth AI function provided by the UE, the collaboration level corresponding to the fourth AI function, the capability corresponding to the fourth AI function, the AI algorithm corresponding to the fourth AI function, or the AI model corresponding to the fourth AI function.

In the H pieces of sub-information, items indicated by different sub-information may be the same or different. For example, the third information may indicate the AI function provided by the UE and the collaboration level corresponding to the AI function provided by the UE. In this case, each piece of sub-information in the H pieces of sub-information may indicate one AI function provided by the UE and a collaboration level corresponding to the AI function. Alternatively, each piece of sub-information in some of the H pieces of sub-information may indicate one AI function provided by the UE and a collaboration level corresponding to the AI function, and each piece of sub-information in the remaining sub-information indicates one AI function provided by the UE, but does not indicate a collaboration level. For example, one piece of sub-information in the H pieces of sub-information is the fourth sub-information, and the fourth sub-information may indicate the fourth AI function provided by the UE and the collaboration level corresponding to the fourth AI function.

For example, the second information includes the sub-information 1 and the sub-information 2, where the sub-information 1 indicates [the CSI-1 and the collaboration level 1], and the sub-information 2 indicates [the BM and the collaboration level 2]}. In this case, the third information may include the sub-information 3, the sub-information 4, and the maximum value of the capability parameter supported by the UE, where the sub-information 3 indicates [the CSI-1 and the collaboration level 1], the sub-information 4 indicates [the BM and the collaboration level 2], and the maximum value of the capability parameter supported by the UE includes, for example, [a maximum storage capability, a maximum computing capability, maximum battery level information, processing delay information, AI model information, and others].

Optionally, if the network element that needs the UE to provide the AI capability is a DU, and the first communication apparatus is, for example, a CU, a CU-CP, or a CU-CP 2, after S404, the first communication apparatus may further send the third information to the DU, and the DU may receive the third information from the first communication apparatus, so that the DU obtains AI capability information of the UE.

According to the technical solution in this embodiment of this application, the network side may first determine AI capability information (for example, the second information) that actually needs to be provided by the UE, so that the UE can send, to the network side, the capability parameter corresponding to the AI function indicated by the second information, and does not need to send, to the network side, a capability parameter corresponding to an AI function that is not indicated by the second information, to reduce redundant information and transmission overheads.

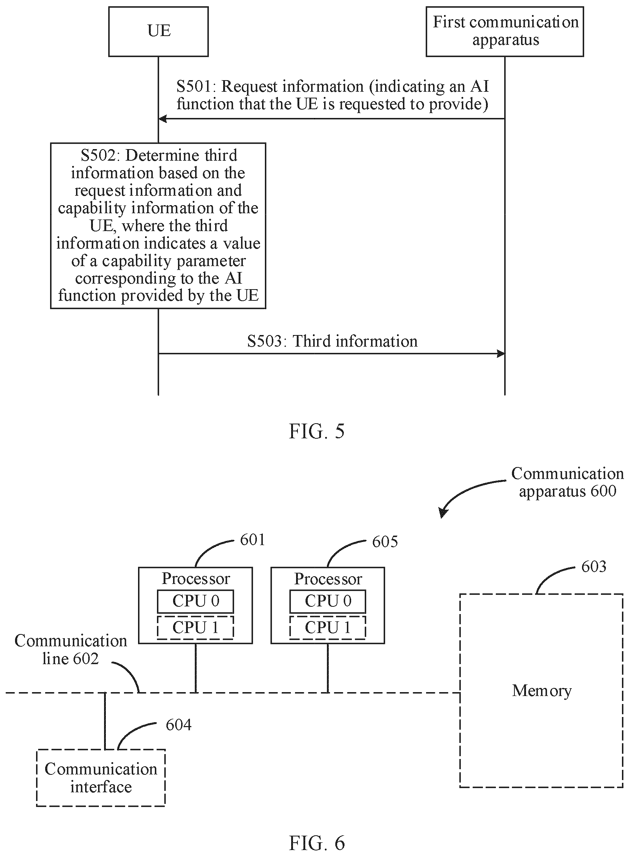

The following describes another communication method provided in an embodiment of this application. In the method, a UE may determine AI capability information that a network side actually needs the UE to provide. FIG. 5 is a flowchart of the method.

S501: A first communication apparatus sends request information to the UE. Correspondingly, the UE receives the request information from the first communication apparatus. The request information may indicate an AI function that the UE is requested to provide, or indicate an AI function that the UE is requested to provide and a collaboration level corresponding to the AI function.

Optionally, a network element that needs the UE to provide an AI capability is, for example, a CU, a CU-CP, or a CU-CP 2, and the first communication apparatus is, for example, a CU, a CU-CP, or a CU-CP 2. It may be understood as that the network element that needs the UE to provide the AI capability is the first communication apparatus. In this case, the request information may be determined by the first communication apparatus. For example, the first communication apparatus may determine the request information based on second AI function requirement information, for example, some or all sub-information included in the second AI function requirement information may be used as the request information. For the second AI function requirement information, refer to the embodiment shown in FIG. 4.

Alternatively, the network element that needs the UE to provide the AI capability is, for example, a DU, and the first communication apparatus is, for example, a CU, a CU-CP, or a CU-CP 2. In this case, the DU may send the request information to the first communication apparatus, so that the first communication apparatus can obtain the request information. For example, the DU may determine the request information based on first AI function requirement information. For example, some or all sub-information included in the first AI function requirement information may be used as the request information. For the first AI function requirement information, refer to the embodiment shown in FIG. 4.

The request information includes, for example, E pieces of sub-information, where E is a positive integer. Optionally, the request information may indicate one or more of the following: the AI function that the UE is requested (expected or hoped) to provide, the collaboration level corresponding to the AI function that the UE is requested to provide, a capability corresponding to the AI function that the UE is requested to provide, an AI algorithm corresponding to the AI function that the UE is requested to provide, or an AI model corresponding to the AI function that the UE is requested to provide. In this case, each piece of sub-information in the E pieces of sub-information may indicate one or more of the foregoing items. For example, one piece of sub-information in the E pieces of sub-information is fifth sub-information, where the fifth sub-information may indicate one or more of the following: a second AI function that the UE is requested to provide, a collaboration level corresponding to the second AI function that the UE is requested to provide, a capability corresponding to the second AI function that the UE is requested to provide, an AI algorithm corresponding to the second AI function that the UE is requested to provide, or an AI model corresponding to the second AI function that the UE is requested to provide. A collaboration level indicated by one piece of sub-information in the E pieces of sub-information may be a collaboration level that the UE is requested to provide for an AI function indicated by the sub-information. A capability indicated by one piece of sub-information in the E pieces of sub-information may be a capability that the UE is requested to provide for an AI function indicated by the sub-information. An AI algorithm indicated by one piece of sub-information in the E pieces of sub-information may be an AI algorithm that the UE is requested to provide for an AI function indicated by the sub-information. An AI model indicated by one piece of sub-information in the E pieces of sub-information may be an AI model that the UE is requested to provide for an AI function indicated by the sub-information.

In the E pieces of sub-information, items indicated by different sub-information may be the same, partially the same, or completely different. The second AI function in this embodiment of this application and the second AI function in the embodiment shown in FIG. 4 may be a same AI function, or may be different AI functions. In the E pieces of sub-information, items indicated by different sub-information may be the same, partially the same, or completely different. For example, one piece of sub-information indicates the second AI function that the UE is requested to provide, and indicates the capability corresponding to the second AI function that the UE is requested to provide; and another piece of sub-information indicates a third AI function that the UE is requested to provide, a collaboration level corresponding to the third AI function that the UE is requested to provide, and a capability corresponding to the third AI function that the UE is requested to provide.

In the E pieces of sub-information, content of a same item indicated by different sub-information may be the same or different. For example, each piece of sub-information in the E pieces of sub-information indicates an AI function that the UE is requested to provide, and AI functions indicated by different sub-information may be the same or may be different. If each piece of sub-information in the E pieces of sub-information indicates an AI function that the UE is requested to provide, and different sub-information indicates different AI functions, it is equivalent to describing a case in which the E pieces of sub-information may indicate E AI functions that the UE is requested to provide.

If one piece of sub-information in the E pieces of sub-information indicates an AI function, the AI function indicated by the sub-information may include at least one sub-function; and/or an AI function indicated by another piece of sub-information in the E pieces of sub-information may be one sub-function included in one AI function. For descriptions of this part of content, further examples, and the like, refer to the descriptions of the first information in S401 in the embodiment shown in FIG. 4.

S502: The UE determines third information based on the request information and capability information of the UE. The capability information of the UE includes, for example, AI capability information of the UE. The third information may include (or indicate) a value of a capability parameter corresponding to the AI function indicated by the request information (or the third information includes a capability parameter corresponding to the AI function provided by the UE); the third information may include (or indicate) values of capability parameters corresponding to the AI function and the collaboration level that are indicated by the request information (or the third information includes capability parameters corresponding to the AI function and the collaboration level that are provided by the UE); the third information may include (or indicate) a value of a capability parameter corresponding to one or more of the AI function, the collaboration level, the capability, the AI algorithm, or the AI model that is indicated by the request information (or the third information includes a capability parameter corresponding to the AI function, the collaboration level, the capability, the AI algorithm, or the AI model that is provided by the UE); or the third information indicates that the UE does not support providing of the requested AI function.

The capability information includes, for example, F pieces of sub-information, where F is a positive integer. Optionally, the capability information may indicate an AI function supported by the UE. In this case, each piece of sub-information in the F pieces of sub-information may indicate one or more of the following: the AI function supported by the UE, a collaboration level corresponding to the AI function supported by the UE, a capability corresponding to the AI function supported by the UE, an AI algorithm corresponding to the AI function supported by the UE, or an AI model corresponding to the AI function supported by the UE. For example, one piece of sub-information may indicate one or more of the following: one AI function 1 supported by the UE, a collaboration level corresponding to the AI function 1 supported by the UE, a capability corresponding to the AI function 1 supported by the UE, an AI algorithm corresponding to the AI function 1 supported by the UE, or an AI model corresponding to the AI function 1 supported by the UE. For example, one piece of sub-information in the F pieces of sub-information is sixth sub-information, and the sixth sub-information may indicate a first AI function supported by the UE, a collaboration level corresponding to the first AI function supported by the UE, a capability corresponding to the first AI function supported by the UE, an AI algorithm corresponding to the first AI function supported by the UE, or an AI model corresponding to the first AI function supported by the UE. The first AI function in this embodiment of this application and the first AI function in the embodiment shown in FIG. 4 may be a same AI function or different AI functions.

In the F pieces of sub-information, items indicated by different sub-information may be the same, partially the same, or completely different. In the F pieces of sub-information, content of items indicated by different sub-information may be the same or different. For this, refer to the related descriptions of the M pieces of sub-information in S401 in the embodiment shown in FIG. 4.

An AI function indicated by one piece of sub-information in the F pieces of sub-information may include at least one sub-function, in other words, the AI function may be considered as a general AI function, and the AI function further includes at least one sub-function; and/or an AI function indicated by another piece of sub-information in the F pieces of sub-information may be one sub-function included in one AI function. For this part of content, refer to the descriptions of the first information in S401 in the embodiment shown in FIG. 4.

That the UE determines (filters or screens) the third information based on the capability information and the request information may include one or more of Manner A to Manner F described in S402 in the embodiment shown in FIG. 4. Therefore, refer to the foregoing descriptions. Details are not described herein again.

S503: The UE sends the third information to the first communication apparatus. Correspondingly, the first communication apparatus receives the third information from the UE.

The third information may include (or indicate) the value of the capability parameter corresponding to the AI function indicated by the request information, or the third information may include (or indicate) the values of the capability parameters corresponding to the AI function and the collaboration level that are indicated by the request information. For an implementation of the third information, refer to S404 in the embodiment shown in FIG. 4.

Alternatively, if the third information determined by the UE in S502 is empty or cannot be determined, the third information may also indicate that the UE does not support providing of the requested AI function.

Optionally, if the network element that needs the UE to provide the AI capability is a DU, and the first communication apparatus is, for example, a CU, a CU-CP, or a CU-CP 2, after S503, the first communication apparatus may further send the third information to the DU, and the DU may receive the third information from the first communication apparatus, so that the DU obtains the AI capability information of the UE.

According to the technical solution in this embodiment of this application, the UE may determine AI capability information that the UE actually needs to provide, so that the UE can send a corresponding capability parameter to a network side, and does not need to send, to the network side, a capability parameter that is not needed by the network side, to reduce redundant information and transmission overheads. In addition, a process of filtering the AI capability information is performed on a UE side, and the UE side does not need to send the first information described in the embodiment shown in FIG. 4 to the network side in advance, so that the transmission overheads can be further reduced.

FIG. 6 is a diagram of a structure of a communication apparatus according to an embodiment of this application. The communication apparatus 600 may be the first communication apparatus or a circuit system of the first communication apparatus according to either the embodiment shown in FIG. 4 or the embodiment shown in the FIG. 5, and is configured to implement the method corresponding to the first communication apparatus in the foregoing method embodiments. Alternatively, the communication apparatus 600 may be a circuit system of the UE according to either the embodiment shown in FIG. 4 or the embodiment shown in FIG. 5, and is configured to implement the method corresponding to the UE in the foregoing method embodiments. For specific functions, refer to descriptions of the foregoing method embodiments. For example, a circuit system is a chip system.

The communication apparatus 600 includes at least one processor 601. The processor 601 may be configured to perform internal processing of the apparatus to implement a specific control processing function. Optionally, the processor 601 includes instructions. Optionally, the processor 601 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 600 includes one or more memories 603. The memory 603 is configured to store instructions. Optionally, the memory 603 may further store data. The processor and the memory may be separately disposed, or may be integrated together.

Optionally, the communication apparatus 600 includes a communication line 602 and at least one communication interface 604. Because the memory 603, the communication line 602, and the communication interface 604 are all optional, they are all represented by dashed lines in FIG. 6.

Optionally, the communication apparatus 600 may further include a transceiver and/or an antenna. The transceiver may be configured to send information to another apparatus or receive information from another apparatus. The transceiver may be referred to as a transceiver, a transceiver circuit, an input/output interface, or the like, and is configured to implement a receiving and sending function of the communication apparatus 600 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 601 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 602 may include a path for information transmission between the foregoing components.

The communication interface 604 uses any apparatus like a transceiver, and is configured to communicate with another device or a communication network, for example, an ethernet, a radio access network (radio access network, RAN), a wireless local area network (wireless local area network, WLAN), or a wired access network.

The memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of instructions or a data structure and that can be accessed by a computer. However, the memory 603 is not limited thereto. The memory 603 may exist independently, and is connected to the processor 601 through the communication line 602. Alternatively, the memory 603 may be integrated with the processor 601.

The memory 603 is configured to store computer-executable instructions for performing the solutions in this application, and the processor 601 controls execution. The processor 601 is configured to execute the computer-executable instructions stored in the memory 603, to implement the steps performed by the first communication apparatus according to either the embodiment shown in FIG. 4 or the embodiment shown in FIG. 5, or implement the steps performed by the terminal device according to either the embodiment shown in FIG. 4 or the embodiment shown in FIG. 5.

Optionally, the computer-executable instructions in this embodiment of this application may also be referred to as application program code. This is not specifically limited in this embodiment of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 605 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 6 is a chip, for example, a chip of the first communication apparatus or a chip of the UE, the chip includes the processor 601 (which may further include the processor 605), the communication line 602, and the communication interface 604. Optionally, the chip may include the memory 603. Specifically, the communication interface 604 may be an input interface, a pin, a circuit, or the like. The memory 603 may be a register, a cache, or the like. The processor 601 and the processor 605 may be a general-purpose CPU, a microprocessor, an ASIC, or one or more integrated circuits configured to control program execution of the communication method according to any one of the foregoing embodiments.

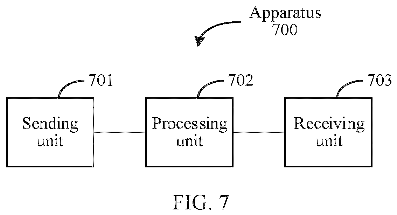

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 7 is a diagram of an apparatus. The apparatus 700 may be the first communication apparatus or the UE in the foregoing method embodiments, or a chip in the first communication apparatus or a chip in the UE. The apparatus 700 includes a sending unit 701, a processing unit 702, and a receiving unit 703.

It should be understood that the apparatus 700 may be configured to implement the steps performed by the first communication apparatus or the UE in the communication method in embodiments of this application. For related features, refer to either the embodiment shown in FIG. 4 or the embodiment shown in FIG. 5. Details are not described herein again.

Optionally, functions/implementation processes of the sending unit 701, the receiving unit 703, and the processing unit 702 in FIG. 7 may be implemented by the processor 601 in FIG. 6 invoking the computer-executable instructions stored in the memory 603. Alternatively, functions/implementation processes of the processing unit 702 in FIG. 7 may be implemented by the processor 601 in FIG. 6 invoking the computer-executable instructions stored in the memory 603, and the functions/implementation processes of the sending unit 701 and the receiving unit 703 in FIG. 7 may be implemented through the communication interface 604 in FIG. 6.

Optionally, when the apparatus 700 is a chip or a circuit, the functions/implementation processes of the sending unit 701 and the receiving unit 703 may be implemented via a pin, a circuit, or the like.

This application further provides a computer-readable storage medium. The computer-readable storage medium stores a computer program or instructions, and when the computer program or the instructions are run, the method performed by the first communication apparatus or the UE according to the foregoing method embodiments is implemented. In this way, the functions in the foregoing embodiments may be implemented in a form of a software functional unit and sold or used as an independent product. Based on such an understanding, the technical solutions of this application essentially, or the part that makes a contribution, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, like a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first communication apparatus or the UE according to any one of the foregoing method embodiments.

An embodiment of this application further provides a processing apparatus, including a processor and an interface. The processor is configured to perform the method performed by the first communication apparatus or the UE according to any one of the foregoing method embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may be disposed in different components of a terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that in embodiments of this application, the first communication apparatus or the UE may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, applied to a first communication apparatus, wherein the method comprises:
receiving first information, wherein the first information comprises first sub-information, and the first sub-information indicates a first artificial intelligence AI function supported by a terminal device;
determining second information based on the first information, wherein the second information indicates an AI function that the terminal device is requested to provide;
sending the second information to the terminal device; and
receiving third information from the terminal device, wherein the third information comprises a capability parameter corresponding to the AI function indicated by the second information.

2. The method according to claim 1, wherein the first sub-information further indicates one or more of the following:
a collaboration level corresponding to the first AI function;
a capability corresponding to the first AI function;
an AI algorithm corresponding to the first AI function; or
an AI model corresponding to the first AI function.

3. The method according to claim 1 or 2, wherein the second information further indicates one or more of the following:
a collaboration level corresponding to the AI function that the terminal device is requested to provide;
a capability corresponding to the AI function that the terminal device is requested to provide;
an AI algorithm corresponding to the AI function that the terminal device is requested to provide; or
an AI model corresponding to the AI function that the terminal device is requested to provide.

4. The method according to any one of claims 1 to 3, wherein the third information further comprises one or more of the following:
a capability parameter corresponding to the collaboration level indicated by the second information;
a capability parameter corresponding to the capability indicated by the second information;
a capability parameter corresponding to the AI algorithm indicated by the second information; or
a capability parameter corresponding to the AI model indicated by the second information.

5. The method according to any one of claims 1 to 4, wherein the receiving first information comprises:
receiving the first information from the terminal device; or
receiving the first information from a second communication apparatus, wherein the second communication apparatus is a neighboring access network device of the first communication apparatus or a core network device.

6. The method according to any one of claims 1 to 5, wherein
the first communication apparatus is an access network device;
the first communication apparatus is a central unit CU;
the first communication apparatus is a central unit control plane CU-CP;
the first communication apparatus is a location management function LMF; or
the first communication apparatus is an access and mobility management function AMF.

7. The method according to claim 6, wherein the first communication apparatus is the CU or the CU-CP, and the determining second information based on the first information comprises:
sending the first information to a distributed unit DU, and receiving the second information from the DU;
receiving first AI function requirement information from a DU, and determining the second information based on the first AI function requirement information and the first information, wherein the first AI function requirement information comprises second sub-information, and the second sub-information indicates a second AI function that the DU requests the terminal device to provide; or
determining the second information based on second AI function requirement information and the first information, wherein the second AI function requirement information comprises third sub-information, and the third sub-information indicates a third AI function that the first communication apparatus requests the terminal device to provide, or the third sub-information indicates a third AI function that the first communication apparatus requests the terminal device to provide, and further indicates one or more of the following: a collaboration level corresponding to the third AI function, a capability corresponding to the third AI function, an AI algorithm corresponding to the third AI function, or an AI model corresponding to the third AI function.

8. The method according to claim 7, wherein the second sub-information further indicates one or more of the following:
a collaboration level corresponding to the second AI function;
a capability corresponding to the second AI function;
an AI algorithm corresponding to the second AI function; or
an AI model corresponding to the second AI function.

9. The method according to claim 7 or 8, wherein the determining the second information based on the first AI function requirement information and the first information comprises one or more of the following:
if the first AI function and the second AI function are a same AI function, the first sub-information further indicates that the collaboration level corresponding to the first AI function is a first level, and the second sub-information indicates that the collaboration level corresponding to the second AI function requested by the DU is a second level, and if that the terminal device supports the first level comprises supporting the second level, determining that the second information comprises the first sub-information;
if the first AI function comprises the second AI function, determining that the second information comprises the second sub-information; or
if the first AI function and the second AI function are a same AI function, and the first information does not indicate the collaboration level corresponding to the first AI function, determining that the second information comprises the second sub-information.

10. The method according to any one of claims 7 to 9, wherein the method further comprises:
sending the third information to the DU.

11. The method according to any one of claims 1 to 10, wherein
the third information comprises fourth sub-information, wherein the fourth sub-information indicates a fourth AI function provided by the terminal device and a value of a capability parameter corresponding to the fourth AI function, or the fourth sub-information indicates a fourth AI function provided by the terminal device, and further indicates one or more of the following: the fourth AI function provided by the terminal device, a collaboration level corresponding to the fourth AI function, a capability corresponding to the fourth AI function, an AI algorithm corresponding to the fourth AI function, an AI model corresponding to the fourth AI function, or a value of a capability parameter corresponding to the fourth AI function; or
the third information comprises fourth sub-information and comprises a maximum value of a capability parameter supported by the terminal device, wherein the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function.

12. The method according to any one of claims 1 to 11, wherein the capability parameter comprises one or more of the following:
a computing capability parameter of the terminal device;
an energy consumption parameter of the terminal device;
a storage capability parameter of the terminal device;
a battery level parameter of the terminal device;
a processing delay of the terminal device;
an AI model supported by the terminal device; or
an AI algorithm supported by the terminal device.

13. The method according to any one of claims 1 to 12, wherein the first AI function comprises at least one sub-function, or the first AI function is a sub-function of one AI function.

14. A communication method, applied to a terminal device, wherein the method comprises:
receiving second information from a first communication apparatus, wherein the second information indicates an AI function that the terminal device is requested to provide; and
sending third information to the first communication apparatus, wherein the third information comprises a capability parameter corresponding to the AI function indicated by the second information.

15. The method according to claim 14, wherein the second information further indicates one or more of the following:
a collaboration level corresponding to the AI function that the terminal device is requested to provide;
a capability corresponding to the AI function that the terminal device is requested to provide;
an AI algorithm corresponding to the AI function that the terminal device is requested to provide; or
an AI model corresponding to the AI function that the terminal device is requested to provide.

16. The method according to claim 14 or 15, wherein the third information further comprises one or more of the following:
a capability parameter corresponding to the collaboration level indicated by the second information;
a capability parameter corresponding to the capability indicated by the second information;
a capability parameter corresponding to the AI algorithm indicated by the second information; or
a capability parameter corresponding to the AI model indicated by the second information.

17. The method according to any one of claims 14 to 16, wherein the method further comprises:
sending first information to the first communication apparatus, wherein the first information comprises first sub-information, the first sub-information indicates a first AI function supported by the terminal device, and the second information is related to the first information.

18. The method according to claim 17, wherein the first sub-information further indicates one or more of the following:
a collaboration level corresponding to the first AI function;
a capability corresponding to the first AI function;
an AI algorithm corresponding to the first AI function; or
an AI model corresponding to the first AI function.

19. The method according to claim 17 or 18, wherein the first AI function comprises at least one sub-function, or the first AI function is a sub-function of one AI function.

20. The method according to any one of claims 14 to 19, wherein
the third information comprises fourth sub-information, wherein the fourth sub-information indicates a fourth AI function provided by the terminal device and a value of a capability parameter corresponding to the fourth AI function, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, an AI model corresponding to the fourth AI function, or a value of a capability parameter corresponding to the fourth AI function; or
the third information comprises fourth sub-information and comprises a maximum value of a capability parameter supported by the terminal device, wherein the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function.

21. The method according to any one of claims 14 to 20, wherein the capability parameter comprises one or more of the following:
a computing capability parameter of the terminal device;
an energy consumption parameter of the terminal device;
a storage capability parameter of the terminal device;
a battery level parameter of the terminal device;
a processing delay of the terminal device;
an AI model supported by the terminal device; or
an AI algorithm supported by the terminal device.

22. A communication method, applied to a terminal device, wherein the method comprises:
receiving request information from a first communication apparatus, wherein the request information indicates an artificial intelligence AI function that the terminal device is requested to provide;
determining third information based on the request information and capability information of the terminal device, wherein the third information comprises a capability parameter corresponding to the AI function indicated by the request information; and
sending the third information to the first communication apparatus.

23. The method according to claim 22, wherein the request information further indicates to request one or more of the following:
a collaboration level corresponding to the AI function provided by the terminal device;
a capability corresponding to the AI function provided by the terminal device;
an AI algorithm corresponding to the AI function provided by the terminal device; or
an AI model corresponding to the AI function provided by the terminal device.

24. The method according to claim 22 or 23, wherein the third information further comprises one or more of the following:
a capability parameter corresponding to the collaboration level indicated by the request information;
a capability parameter corresponding to the capability indicated by the request information;
a capability parameter corresponding to the AI algorithm indicated by the request information; or
a capability parameter corresponding to the AI model indicated by the request information.

25. The method according to any one of claims 22 to 24, wherein
the request information comprises fifth sub-information, wherein the fifth sub-information indicates a second AI function that the terminal device is requested to provide, or the fifth sub-information indicates a second AI function that the terminal device is requested to provide, and further indicates to request one or more of the following: a collaboration level corresponding to the second AI function, a capability corresponding to the second AI function, an AI algorithm corresponding to the second AI function, or an AI model corresponding to the second AI function; or
the capability information comprises sixth sub-information, wherein the sixth sub-information indicates a first AI function supported by the terminal device, or the sixth sub-information indicates a first AI function supported by the terminal device, and further indicates one or more of the following: a collaboration level corresponding to the first AI function, a capability corresponding to the first AI function, an AI algorithm corresponding to the first AI function, or an AI model corresponding to the first AI function.

26. The method according to claim 25, wherein the determining third information based on the request information and capability information of the terminal device comprises:
if the first AI function and the second AI function are a same AI function, the sixth sub-information indicates that the collaboration level corresponding to the first AI function is a first level, and the fifth sub-information indicates that the collaboration level corresponding to the second AI function is a second level, and if that the terminal device supports the first level comprises supporting the second level, determining that the third information comprises the fifth sub-information; and/or
if the first AI function comprises the second AI function, determining that the third information comprises the fifth sub-information.

27. The method according to claim 25 or 26, wherein
the third information comprises fourth sub-information, wherein the fourth sub-information indicates a fourth AI function provided by the terminal device and a value of a capability parameter corresponding to the fourth AI function, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, an AI model corresponding to the fourth AI function, or a value of a capability parameter corresponding to the fourth AI function; or
the third information comprises fourth sub-information and comprises a maximum value of a capability parameter supported by the terminal device, wherein the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function.

28. The method according to any one of claims 22 to 27, wherein the capability parameter comprises one or more of the following:
a computing capability parameter of the terminal device;
an energy consumption parameter of the terminal device;
a storage capability parameter of the terminal device;
a battery level parameter of the terminal device;
a processing delay of the terminal device;
an AI model supported by the terminal device; or
an AI algorithm supported by the terminal device.

29. A communication method, applied to a first communication apparatus, wherein the method comprises:
sending request information to a terminal device, wherein the request information indicates an artificial intelligence AI function that the terminal device is requested to provide; and
receiving third information from the terminal device, wherein the third information comprises a capability parameter corresponding to the AI function indicated by the request information.

30. The method according to claim 29, wherein the request information further indicates to request one or more of the following:
a collaboration level corresponding to the AI function provided by the terminal device;
a capability corresponding to the AI function provided by the terminal device;
an AI algorithm corresponding to the AI function provided by the terminal device; or
an AI model corresponding to the AI function provided by the terminal device.

31. The method according to claim 29 or 30, wherein the third information further comprises one or more of the following:
a capability parameter corresponding to the collaboration level indicated by the request information;
a capability parameter corresponding to the capability indicated by the request information;
a capability parameter corresponding to the AI algorithm indicated by the request information; or
a capability parameter corresponding to the AI model indicated by the request information.

32. The method according to any one of claims 29 to 31, wherein
the first communication apparatus is an access network device;
the first communication apparatus is a central unit CU;
the first communication apparatus is a central unit control plane CU-CP;
the first communication apparatus is a location management function LMF; or
the first communication apparatus is an access and mobility management function AMF.

33. The method according to claim 32, wherein the first communication apparatus is the CU or the CU-CP; and
the method further comprises: receiving the request information from a distributed unit DU; or
determining the request information based on second AI function requirement information, wherein the second AI function requirement information indicates the AI function that the terminal device is requested to provide, or the second AI function requirement information indicates the AI function that the terminal device is requested to provide, and further indicates one or more of the following: the collaboration level corresponding to the AI function provided by the terminal device, the capability corresponding to the AI function provided by the terminal device, the AI algorithm corresponding to the AI function provided by the terminal device, or the AI model corresponding to the AI function provided by the terminal device.

34. The method according to claim 33, wherein if the request information is from the DU, the method further comprises:
sending the third information to the DU.

35. The method according to any one of claims 29 to 34, wherein
the third information comprises fourth sub-information, wherein the fourth sub-information indicates a fourth AI function provided by the terminal device and a value of a capability parameter corresponding to the fourth AI function, or the fourth sub-information indicates a fourth AI function provided by the terminal device, and further indicates one or more of the following: a collaboration level corresponding to the fourth AI function, a value of a capability parameter corresponding to the fourth AI function, a capability corresponding to the fourth AI function, an AI algorithm corresponding to the fourth AI function, or an AI model corresponding to the fourth AI function; or
the third information comprises fourth sub-information and comprises a maximum value of a capability parameter supported by the terminal device, wherein the fourth sub-information indicates a fourth AI function provided by the terminal device, or the fourth sub-information indicates a fourth AI function provided by the terminal device, and further indicates one or more of the following: a collaboration level corresponding to the fourth AI function, a capability corresponding to the fourth AI function, an AI algorithm corresponding to the fourth AI function, or an AI model corresponding to the fourth AI function.

36. The method according to any one of claims 29 to 35, wherein the capability parameter comprises one or more of the following:
a computing capability parameter of the terminal device;
an energy consumption parameter of the terminal device;
a storage capability parameter of the terminal device;
a battery level parameter of the terminal device;
a processing delay of the terminal device;
an AI model supported by the terminal device; or
an AI algorithm supported by the terminal device.

37. A communication apparatus, comprising a processor and a memory, wherein the memory is coupled to the processor, and the processor is configured to perform the method according to any one of claims 1 to 13, the method according to any one of claims 14 to 21, the method according to any one of claims 22 to 28, or the method according to any one of claims 29 to 36.

38. A computer-readable storage medium, wherein the computer-readable storage medium is configured to store a computer program, and when the computer program is run on a computer, the computer is enabled to perform the method according to any one of claims 1 to 13, the computer is enabled to perform the method according to any one of claims 14 to 21, the computer is enabled to perform the method according to any one of claims 22 to 28, or the computer is enabled to perform the method according to any one of claims 29 to 36.

39. A chip system, wherein the chip system comprises:
a processor and an interface, wherein the processor is configured to: invoke instructions from the interface and run the instructions, and when the processor executes the instructions, the method according to any one of claims 1 to 13, the method according to any one of claims 14 to 21, the method according to any one of claims 22 to 28, or the method according to any one of claims 29 to 36 is implemented.

40. A computer program product, wherein the computer program product comprises a computer program, and when the computer program is run on a computer, the computer is enabled to perform the method according to any one of claims 1 to 13, the computer is enabled to perform the method according to any one of claims 14 to 21, the computer is enabled to perform the method according to any one of claims 22 to 28, or the computer is enabled to perform the method according to any one of claims 29 to 36.
